# EUROPEAN PATENT APPLICATION

(11) **EP 2 669 252 A1**
(43) Date of publication of application: **04.12.2013**
(21) Application number: 12739423.7
(22) Date of filing: 18.01.2012
(51) Int. Cl.: C01F 7/00, C01G 53/00

(54) **METHOD FOR PRODUCING ANION-EXCHANGING LAYERED DOUBLE HYDROXIDE AND METHOD FOR SUBSTITUTING CARBONATE ION OF LAYERED DOUBLE HYDROXIDE CONTAINING CARBONATE ION**

(30) Priority: 27.01.2011 JP 2011014710; 31.08.2011 JP 2011188138
(71) Applicant: National Institute for Materials Science, Tsukuba-shi, Ibaraki 305-0047 (JP)
(72) Inventor: IYI Nobuo, Tsukuba-shi Ibaraki 305-0047 (JP); YAMADA Hirohisa, Tsukuba-shi Ibaraki 305-0047 (JP); SASAKI Takayoshi, Tsukuba-shi Ibaraki 305-0047 (JP)
(74) Representative: Isarpatent
(86) International application number: PCT/JP2012/050976
(87) International publication number: WO 2012/102151

(57) **Abstract**

A method for producing an anion-exchanging LDH using a carbonate ion-type layered double hydroxide represented by general formula QₐT(OH)_{z}(CO₃²⁻)_{0.5-b/2}(X⁻)_{b}·H₂O (where 1.8≤a≤4.2, z=2(a+1), 0≤b<0.5, 0≤n≤5, Q represents divalent metal, T represents trivalent metal, and X⁻ is an element or atom group that turns to monovalent anion) as a starting material, with value b increased at least to 0.5 and a maximum of 1, wherein the carbonate ion-type layered hydroxide is made to contact an alcoholic solution containing an acidic compound (MXₘ) (where m=1, 2, or 3; when m=1, M is H or NRR'R"·H, with R, R', and R" being H or organic group; and when m=2 or 3, M is a metal salt, namely a divalent or trivalent metal).

## Description

### Technical Field

The present invention relates to a method for producing an anion-exchanging layered double hydroxide having easily ion-exchangeable anions (X⁻) between layers. More specifically, the present invention relates to a method for producing an anion-exchanging layered double hydroxide by substituting carbonate ions, using a layered double hydroxide containing hardly ion-exchangeable carbonate ions (CO₃²⁻) between layers as a starting material, and a method for substituting carbonate ions of the carbonate-ion-containing layered double hydroxide.

### Background Art

Many layered compounds have been developed by using layered compounds such as clay minerals, and by allowing various types of cations or cationic functional organic substances to be included in such layered compounds. This method capitalizes on the fact that clay mineral layers have negative charge, and that cations existing between layers are easily ion-exchangeable. The layered double hydroxide (hereinafter referred to as LDH) has, unlike clay minerals, positively-charged layers, has anions between layers, and has anion-exchanging property. Since there are only a few types of inorganic anion-exchanging materials, LDHs are attracting attention (Non-patent Literature 1).

As a method for synthesizing a layered compound having anions between LDH layers, some methods for substituting carbonate ions by other anions using an LDH containing carbonate ions between layers (hereinafter referred to as carbonate ion-type LDH) are known.

Since the carbonate ion-type LDH can be synthesized easily and high-quality crystal having high crystallinity can be obtained, most of the LDHs manufactured industrially are this carbonate ion-type LDHs. However, the carbonate ion-type LDHs have extremely low ion-exchangeability, and therefore it is difficult to change them into LDHs containing anions other than carbonate ions by ordinary anion exchange (Non-patent Literature 2). If carbonate ion-type LDHs can be converted into anion-exchanging LDHs containing easily ion-exchangeable anions (such as perchlorate ions, nitrate ions, and chlorine ions) by simpler chemical process, broad application is expected both industrially and at research and test levels. A method for converting carbonate ion-type LDHs to anion-exchanging LDHs by simpler chemical process has therefore been desired.

The inventors have found that by allowing a mixed solution of hydrochloric acid and sodium chloride (NaCl) to react with a carbonate ion-type LDH at a room temperature, decarbonation occurs, converting the carbonate ion-type LDH into an LDH containing chlorine ions (Cl⁻) (Patent Literature 1, Non-patent Literature 3).

Decarbonation that uses a mixed chloric acid-NaCl solution is simple. However, since the solution is highly acidic, and in addition the LDH itself is easily soluble to an aqueous solution of acid, it is necessary to cause decarbonation to occur under the condition where LDH does not dissolve. Furthermore, in the decarbonation using a mixed chloric acid-NaCl solution, complete conversion into an anion-exchanging LDH other than Cl⁻ type (such as ClO₄⁻- and NO₃⁻-types) was difficult (Non-patent Literature 4). As described above, the decarbonation using a mixed chloric acid-NaCl solution is groundbreaking as a method for producing LDHs containing chlorine ions, namely easily anion-exchangeable anions without affecting particle size or uniformity. Due to problems described previously, however, further improvement has been desired.

The inventors found that by using a mildly acidic acetic acid buffer solution and allowing a solution prepared by adding neutral salt such as sodium chloride (NaCl), sodium perchlorate, and sodium nitrate to this acetic acid buffer solution to react with carbonate ion-type LDH at a room temperature, decarbonation occurred, causing conversion into an LDH containing anions that had been added (Patent Literature 2, Non-patent Literatures 5 and 6). This method has also ensured conversion into an anion-exchanging LDH of a type other than Cl⁻ type (such as ClO₄⁻- and NO₃⁻-types).

With this reaction, however, since ion exchange reaction due to chemical equilibrium also occurs, a largely excessive amount of anions to be inserted in LDH layers must exist in the reaction system. In particular, since perchlorate ions and nitrate ions are low in affinity to LDHs, an excessive amount of salt was needed to introduce these anions (Non-patent Literature 6). Furthermore, as a result of using acetic acid buffer solution to adjust the acidity, anionic acetate ions exist in the system. Consequently, depending on the type of the LDH, there was a risk of entry of acetate ions between layers. As described above, the method using an acetic acid buffer solution has allowed decarbonation to occur under stable pH conditions. However, many types of reagents must be used in largely excessive amounts, and depending on the type of LDH, there was a risk of allowing entry of acetate ions existing in the system. Solving these problems has been necessary.

### Citation List

### Patent Literature

Patent Literature 1: JP 4228077 B
Patent Literature 2: WO 2009/072488
Patent Literature 3: JP 2005 335965 A

### Non-patent Literature

Non-patent Literature 1: Cavani, F., Trifiro, F., Vaccari, A., Catal. Today 11, 173-301 (1991)
Non-patent Literature 2: Miyata, S., Clays Clay Miner. 31, 305-311 (1983)
Non-patent Literature 3: Iyi, Nobuo, Matsumoto, T., Kaneko, Y., Kitamura, K., Chem Mater. 16, 2926-2932 (2004)
Non-patent Literature 4: Iyi, Nobuo, Okamoto, K., Kaneko, Y., Matsumoto, T., Chem Lett. 34, 932-933 (2005)
Non-patent Literature 5: Iyi, Nobuo, Sasaki, Takayoshi, J. Colloid Interface Sci. 322, 237-245 (2008)
Non-patent Literature 6: Iyi, Nobuo, Yamada, Hirohisa, Chem. Lett. 39, 591-593 (2010)
Non-patent Literature 7: Iyi, N., Fujii, K., Okamoto, K., Sasaki, Takayoshi, Appl. Clay Sci. 35, 218-227 (2007)

### Summary of Invention

### Technical Problem

The objective of the present invention is to provide a method for causing decarbonation to occur easily and quickly using a carbonate ion-type LDH as a starting material and a few types and small amounts of reagents, thereby producing an LDH having high anion exchangeability while maintaining outer crystalline shape, crystal structure, and crystallinity.

### Solution to Problem

The inventors have found the following facts by experiments:
(1) Dissolution of LDH due to acid is suppressed significantly in an alcohol such as methanol and ethanol, compared to the dissolution in an aqueous solution,
(2) Since generated carbon dioxide does not remain in an alcoholic solvent in a form of carbonate ions but is discharged from the solvent, a largely excessive amount of anions are not required, unlike the ion exchange in an aqueous solution, and reaction with acid occurs mostly quantitatively,
(3) Carbon dioxide is also discharged by amine acid salt, which is an ionic compound formed from the reaction of an amine and an acid, namely an acidic compound other than acids, and thus similar decarbonation occurs, and
(4) With metal salt, namely an acidic compound containing no amine, also, acid is generated due to hydrolysis of metal salt by a trace amount of water contained in the salt or solvent, and consequently decarbonation occurs.
Acidic compounds are defined as compounds that exhibit acidity in water, and acids or salts generated by strong acid and weak base are categorized as acidic compounds.
The present invention provides a method for producing an anion-exchanging LDH that has been completed based on the knowledge described above.

A first method for producing an anion-exchanging LDH of the present invention, comprising: reacting a carbonate ion-type LDH having a composition represented by general formula (1) with an organic solvent containing an acidic compound represented by general formula (2), thereby increasing value b in general formula (1) to at least 0.5 and to a maximum of 1.

[Chemical formula 1]

QₐT(OH)_{z}(CO₃)_{0.5-b/2}X_{b·}nH₂O (1)

In formula (1) shown above, a represents a numeric value range 1.8≤a≤4.2, z is 2(a+1), and b represents a numeric value range 0≤b<0.5. Q represents divalent metal, T represents trivalent metal, X represents monovalent anion, and n falls within a range from 0 to 5.

MXₘ (2)

In formula (2) shown above, X means an element or atom group corresponding to monovalent anion (X⁻), and m is 1, 2, or 3. When m=1, MX is protic acid represented by HX or amine-acid salt represented as NRR'R"·HX (where R, R', and R" are hydrogen, hydroxyl group or organic group, each being allowed to be the same or different.) When m=2 or 3, MX is a metal salt of a divalent or trivalent metal.

A second embodiment of the present invention is a method for producing the anion-exchanging LDH described in the first producing method, characterized in that a metal salt represented as the MX₂ or MX₃ generates protic acid (HX) by hydrolysis.

A third embodiment of the present invention is a method for producing the anion-exchanging LDH described in the first producing method, wherein the X is anion of one of the following ions: chlorine ion (Cl⁻), bromine ion (Br⁻), nitrate ion (NO₃⁻), perchlorate ion (ClO₄⁻), chlorate ion (ClO₃⁻), and acetate ion (CH₃COO⁻).

A fourth embodiment of the present invention is a method for producing the anion-exchanging LDH described in the first producing method, wherein each of the R, R', and R" of the amine acid salt in formula (2) is expressed by composition formula CₜHₚO_{q} (t=0 to 6, p=1 to 13, q=0 to 2).

A fifth embodiment of the present invention is a method for producing the anion-exchanging LDH described in the fourth producing method, wherein the R, R', and R" of the amine acid salt is a substituent selected from hydrogen, hydroxyl group, alkyl group, or alkyl group substituted by hydroxyl group.

A sixth embodiment of the present invention is a method for producing the anion-exchanging LDH described in the fifth producing method, wherein the alkyl group is methyl group or ethyl group, and the alkyl group substituted by hydroxyl group is hydroxymethyl group or hydroxyethyl group.

A seventh embodiment of the present invention is a method for producing the anion-exchanging LDH described in the fifth producing method, wherein the amine acid salt is an ammonium salt.

An eighth embodiment of the present invention is a method for producing the anion-exchanging LDH described in the fifth producing method, wherein X- is chlorine ion.

A ninth embodiment of the present invention is a method for producing the anion-exchanging LDH described in the third producing method, wherein the M is one of the following divalent metals: Zn, Mg, and Ca.

A tenth embodiment of the present invention is a method for producing the anion-exchanging LDH described in the third producing method, wherein the M is either one of the following trivalent metals: Fe and Al.

An eleventh embodiment of the present invention is a method for producing the anion-exchanging LDH described in the first producing method, wherein the organic solvent is one or more types of organic solvents having carbon number of 1 to 4

A twelfth embodiment of the present invention is a method for producing the anion-exchanging LDH described in the first producing method, wherein the organic solvent is methanol, ethanol, 2-propanol, tetrahydrofuran, or acetone.

A thirteenth embodiment of the present invention is a method for producing the anion-exchanging LDH described in the first producing method, wherein a carbonate ion-type LDH represented by general formula (1) shown above is dispersed in an organic solvent containing an acidic compound represented by general formula (2) shown above.

A fourteenth embodiment of the present invention is a method for producing an anion-exchanging layered double hydroxide represented by general formula (3) shown below, comprising: reacting a carbonate ion-type layered double hydroxide represented by general formula (1).
[Chemical formula 3]

QₐT(OH)_{z}(CO₃)₀._{5-b/2}X_{b}·nH₂O (1)

(In formula (1) shown above, 1.8≤a≤4.2, 0≤b<05, z=2(a+1), Q represents divalent metal, T represents trivalent metal, X- represents monovalent anion, and 0≤n≤5.)

with an organic solvent containing a compound represented by general formula (2).
[Chemical formula 4]

MXₘ (2)

(In formula (2) shown above, X means an element or atomic group corresponding to monovalent anion (X⁻), m is 1, 2, or 3, and when m=1, MX represents protic acid (HX) or amine-acid salt (NRR'R"·HX, where R, R', and R" are hydrogen, hydroxyl group, or organic group, each being allowed to be the same or different), and when m=2 or 3, M represents a divalent or trivalent metal.)

[Chemical formula 5]

QₐT(OH)_{z}(X⁻)·nH₂O (3)

(In formula (3) shown above, 1.8≤a≤4.2, z=2(a+1), Q represents divalent metal, T represents trivalent metal, X- represents monovalent anion, and 0≤n≤5.)

Also a method for substituting carbonate ions in the carbonate ion-type layered double hydroxide of the present invention, comprising: reacting a carbonate ion-type layered double hydroxide represented by general formula (1)

[Chemical formula 6]

QₐT(OH)_{z}(CO₃)_{0.5-b/2}X_{b}·nH₂O (1)

(In general formula (1) shown above, 1.8≤a≤4.2, 0≤b≤0.5, z=2(a+1), Q represents divalent metal, T represents trivalent metal, X- represents monovalent anion, and 0≤n≤5.)

with an acidic compound represented by general formula (2).

[Chemical formula 7]

MXₘ (2)

(In general formula (2), X means an element or atomic group corresponding to monovalent anion (X⁻), m is 1, 2, or 3, and when m=1, MX represents protic acid (HX) or amine-acid salt represented as NRR'R"·HX (where each of R, R', and R" is H or organic group, each being allowed to be the same or different), and when m=2 or 3, M represents divalent or trivalent metal.)

### Advantageous Effect of Invention

The advantageous effect of the present invention is as follows:
1) When synthesizing an LDH containing perchlorate ions or nitrate ions by conventionally known methods such as hydrochloric acid-NaCl method (Patent Literature 1) and the method using acetic acid buffer (Patent Literature 2), a largely excessive amount of perchlorate ions and nitrate ions were necessary. Meanwhile, with the present invention, use of excessive amount of salt is not necessarily required. When using protic acid in the present invention, use of a minimum amount of only one type of acid as reagent is sufficient, and in addition, the amount of acid of approximately equivalent to, or excessive by approximately 50% of, the total amount of carbonate ions in the LDH is sufficient, which is economical. Furthermore, when using amine acid salt, the amount of reagent of 3 to 5 times the total amount of carbonate ions in the sample is sufficient, which is also economical.
   According to the present invention, decarbonation from the LDH is achieved with a few types and a little amount of reagents.
2) Since acidic compound containing anions to be used for ion exchange only is used in the present invention, there exist target anions only in the reaction system, and there is no concern of mixing in of other types of anions.
3) According to the present invention, reaction is completed in approximately 30 to 60 minutes in the case of acid, and even when amine acid salt is used, reaction is completed in a period as short as 2 hours. With conventional methods, with the method using acetic acid buffer, for example, conversion into perchlorate ions and nitrate ions requires at least 3 hours, more preferably approximately 5 hours (Non-patent Literature 6).
4) According to the present invention, since the organic solvent does not contain carbonate ions, degassing operation, which is required when water is used, is not necessary. In addition, since carbonate ions are not generated due to dissolution of carbon dioxide in the air even after washing, carbonate ions are rarely taken in incidentally.
Thanks to these effects and advantages, the present invention is appropriate for industrial manufacturing, and therefore has great significance.

The LDHs having high anion-exchanging property obtained by the present invention are easily exchangeable with various inorganic or organic anions by anion exchange. Consequently, the anion-exchanging LDH obtained by the present invention can be used for synthesizing new functionally layered compounds by introducing anionic functional molecules, and thus can be developed to new application fields such as establishment of nanodevices.

### Brief Description of Drawings

FIG. 1 is a drawing illustrating a scheme of conversion from carbonate ion-type LDH to highly anion-exchanging LDH by contact with an organic solvent containing acid, amine acid salt, or metal salt.
FIG. 2 is a chart showing the change in weight of products obtained by allowing perchloric acid to react with carbonate ion-type LDH (CO₃²⁻MgAl-LDH3) in (a) a methanol solvent and (b) an aqueous solvent in Example 1 of the present invention.
FIG. 3 shows the Fourier transform infrared spectrum (transmittance) of LDH (MgAl-LDH3) containing (a) carbonate ions and (b) perchlorate ions between layers in Example 1.
FIG. 4 is a chart showing the Mg/Al ratio (molar ratio) of products obtained by allowing perchloric acid to react with carbonate ion-type LDH (CO₃²⁻MgAl-LDH3) in (a) methanol solvent and (b) aqueous solvent in Example 1.
FIG. 5 is a chart showing the powder X-ray profile of (a) carbonate ion-type and (b) perchlorate ion-type MgAl-LDH3 in Example 1.
FIG. 6 provides scanning electron microscopic (SEM) images of samples (a) carbonate ion-type and (b) perchlorate ion-type MgAl-LDH3 in Example 1.
FIG. 7 is a chart showing the change in carbon dioxide (CO₂) concentration in outlet nitrogen gas obtained by allowing reaction to occur in a solution of perchloric acid-methanol in nitrogen gas flow (0.5 L/min.) in Example 1.
FIG. 8 is a chart showing the Fourier transform infrared spectrum (transmittance) of (a) carbonate ion-type and (b) perchlorate ion-type MgAl-LDH2 in Example 2.
FIG. 9 is a chart showing the change in weight of product obtained by allowing perchloric acid-methanol to react with the carbonate ion-type LDH (CO₃²⁻MgAl-LDH2) in Example 2.
FIG. 10 is a chart showing the change in Mg/Al ratio (molar ratio) of products obtained by allowing perchloric acid-methanol to react with carbonate ion-type LDH (CO₃²⁻MgAl-LDH2) in Example 2.
FIG. 11 provides scanning electron microscopic (SEM) images of samples (a) carbonate ion-type and (b) perchlorate ion-type MgAl-LDH2 in Example 2.
FIG. 12 is a chart showing the change in weight of product obtained by allowing perchloric acid-ethanol to react with carbonate ion-type LDH (CO₃²⁻MgAl-LDH3) in Example 3.
FIG. 13 is a chart showing the Fourier transform infrared spectrum (transmittance) of LDH (MgAl-LDH3) after the reaction in Example 3.
FIG. 14 is a chart showing the change in weight of product obtained by allowing nitric acid-methanol to react with carbonate ion-type LDH (CO₃²⁻MgAl-LDH3) in Example 4.
FIG. 15 is a chart showing the Fourier transform infrared spectrum (transmittance) of (a) carbonate ion-type and (b) perchlorate ion-type NiAl-LDH2 in Example 5.
FIG. 16 is a chart showing the powder X-ray profile of (1a) carbonate ion-type and (1b) perchlorate ion-type NiAl-LDH2 in Example 5, (2a) carbonate ion-type and (2b) perchlorate ion-type NiAl-LDH3 in Example 6, and (3a) carbonate ion-type and (3b) perchlorate ion-type NiAl-LDH4 in Example 7.
FIG. 17 is a chart showing the Fourier transform infrared spectrum (transmittance) of (a) carbonate ion-type and (b) perchlorate ion-type NiAl-LDH3 in Example 6.
FIG. 18 is a chart showing the change in weight of product obtained by allowing perchloric acid (HClO₄) to react with carbonate ion-type LDH (CO₃²⁻MgAl-LDH3) in various solvents in Example 8.
FIG. 19 is a chart showing the change in residual carbonate ion content in CO₃²⁻MgAl-LDH3 with respect to the amount of perchloric acid (HClO₄) added in experiments where perchloric acid (HClO₄) was allowed to react with carbonate ion-type LDH (CO₃²⁻MgAl-LDH3) in various solvents in Example 8.
FIG. 20 is a chart showing the change in weight (1a, b, c), and the change in residual carbonate ion content (2a, b, c), of products with respect to the amount of ammonium salt added observed when reactions were performed by allowing ammonium salts (NH₄ClO₄, NH₄Cl, NH₄NO₃), a type of amine acid salt, to react with CO₃²⁻MgAl-LDH3 in methanol in Example 9.
FIG. 21 is a chart showing the (1) change in the weight, and (2) change in residual carbonate ion content, of products with respect to the amount of ammonium salt added observed when reactions were performed by allowing dimethylamine hydrochloride to react with CO₃²⁻MgAl-LDH3 in methanol in Example 10.
FIG. 22 is a chart showing the change in the weight of product obtained when reaction was made to occur by allowing (a) sodium chloride (NaCl) and (b) AlCl₃·6H₂O to react with CO₃²⁻MgAl-LDH3 in methanol in Example 12.

### Description of Embodiments

The method for producing the anion-exchanging LDH in the embodiment of the present invention will hereinafter be described in detail by referring to the attached figures.

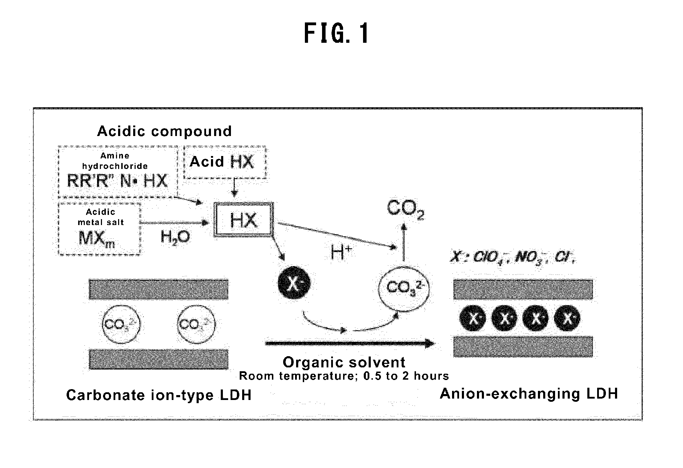

FIG. 1 is a schematic diagram illustrating the process of producing anion-exchanging LDH according to the embodiment of the present invention, wherein carbonate ion-type LDH and an acidic compound are made to contact in organic solvent, thus generating anion-exchanging LDH. The acidic compounds are compounds exhibiting acidity in water, and salts generated from acids or those generated from strong acid and weak base are defined as acidic compounds.
Carbonate ion-type LDH is represented by general formula (1) shown below:

[Chemical formula 8]

QₐT(OH)_{z}(CO₃)_{0.5-b/2}X_{b}·nH₂O (1)

In formula (1) shown above, 1.8≤a≤4.2, 0≤b<0.5, z=2(a+1), Q represents divalent metal, T represents trivalent metal, X- represents monovalent anion, and 0≤n≤5. n represents the amount of water existing between layers, and may change within the following range depending on the humidity of the atmosphere: 0≤n≤5.

When b=0 in general formula (1), carbonate ion (CO₃²⁻) reaches the maximum value of 0.5, which represents carbonate ion-type LDH containing the maximum amount of carbonate ions. With this LDH, it is most difficult for decarbonation to occur. The present invention uses this LDH as a starting material. Meanwhile, when 0<b<0.5, namely when some part has already been anion-exchanged for some reason, decarbonation occurs easily by this method using a starting material containing small amount of carbonate ions, which may therefore naturally be used as a starting material.
Carbonate ion-type LDH as a starting material may contain a trace amount of unintended impurities during the generation process, and thus it may not be represented by an ideal formula such as formula (1), but the present invention does not exclude such cases.

Carbonate ion-type LDH represented by general formula (1) shown above is made to contact an organic solvent containing an acidic compound represented by general formula (2) shown below to generate anion-exchanging LDH.

[Chemical formula 9]

MXₘ (2)

In formula (2) shown above, X means an element or atom group corresponding to monovalent anion (X⁻), and m is 1, 2, or 3. When m=1, MX is protic acid represented by HX or amine acid-salt represented as NRR'R"·HX (where R, R', and R" are hydrogen, hydroxyl group or organic group, each being allowed to be the same or different.) When m=2 or 3, MX is a metal salt of a divalent or trivalent metal. X- in formula (1) and X in formula (2) represent the same element or atomic group.

Specifically, the acidic compounds include the following:
(1) Protic acid (HX) containing monovalent anion (X⁻),
(2) Amine acid salt including protic acid (HX) containing monovalent anion (X⁻) and NRR'R"·HX (hereinafter referred to as amine hydrochloride in this specification) containing amine (NRR'R") and
(3) Metal salt (MX₂ or MX₃) generating the protic acid (HX) by hydrolysis.

The anion (X⁻) is preferably chlorine ion (Cl⁻), bromine ion (Br⁻), nitrate ion (NO₃⁻), perchlorate ion (ClO₄⁻), chlorate ion (ClO₃⁻), and acetate ion (CH₃COO⁻). X in general formula (2) represents corresponding atom, which is released as anion (X⁻) in aqueous solution, and protic acid (HX) is desirably HCl, HBr, HNO₃, HClO₄, HClO₃, or CH₃COOH. However, it is only necessary that the protic acid is monovalent anion, and anions other than those listed above are not excluded regardless of whether they are organic or inorganic.

R, R', and R" of the amine acid salt (NRR'R"·HX) are groups respectively represented by composition formula CₜHₚO_{q} (t=0 to 6, p=1 to 13, q=0 to 2).
Of the amine acid salt used in Examples, three are selected to show how they are represented by this composition formula.

When all of R, R', and R" satisfy t=q=0 and p=1, the formula becomes NH₃·HX, which represents ammonium salt such as NH₄Cl and NH₄ClO₄.
When R satisfies t=2, p=5, and q=0, and both R' and R" satisfy t=q=0 and p=1, the formula becomes C₂H₅NH₂·HX, which represents diethylamine hydrochloride, one of amine acid salts, when X=Cl.
When both R and R' satisfy t=2, p=5, and q=1, and R" satisfies t=q=0 and p=1, the formula becomes C₂H₅ONH·HX, which represents diethanol hydrochloride, one of amine acid salt, when X=Cl.

Specifically, R, R', and R" are hydrogen, hydroxyl group or organic group. Here, organic group means alkyl group having carbon number of 1 to 6 substituted by alkyl group or hydroxyl group having carbon number of 1 to 6.

Metal salt M is one of the following metals: divalent Zn, Mg, and Ca, and trivalent Fe and Al. However, metal salts other than those listed above are not excluded, provided that they generate acid in an aqueous solution.

Substituting carbonate ions contained in LDH by anions means that value b in formula (1) becomes larger than value b of the starting material. When all the carbonate ions have been substituted by anions (X⁻) completely, the obtained anion-exchanging LDH is represented by general formula (3) shown below:

[Chemical formula 10]

QₐT(OH)_{z}(X⁻)·ₙH₂O (3)

In formula (3) shown above, a represents numeric value range of 1.8≤a≤4.2, z is 2(a+1), Q represents divalent metal, T represents trivalent metal, X represents an atom that turns into monovalent anion, and n represents the amount of water existing between layers. n changes within the following range depending on the humidity of the atmosphere: 0≤n≤5.

The anion-exchanging LDH represented by general formula (3) has high anion-exchanging property. General formula (3) is a chemical formula typically representing a case where ion exchange into anions (X⁻) has been completed most perfectly. By relaxing reaction conditions, partial substitution into anions (X⁻) occurs, thus naturally generating a chemical compound containing residual carbonate ions.
A case where complete substitution product is practically not required and a case where partial substitution is practically necessary are included in the scope of the present invention. Specifically, it is only necessary that in formula (1), b increases to become larger than value b of the starting material and reach the desired value, and QₐT(OH)_{z}(X⁻)·nH₂O need not be strictly maintained.

Supplemental description of anion-exchanging LDH will be given below. Generally, in an aqueous solvent, ions having large valence number (multivalent anions such as divalent and trivalent anions) or small-size ions have low anion-exchanging property. On the contrary, monovalent anions are known to have high anion-exchanging property. The larger the size of the ions, the higher the anion-exchanging property. In the present invention, X of the anion-exchanging LDH represents one of the following anions: chlorine ion (Cl⁻), bromine ion (Br⁻), nitrate ion (NO₃⁻), perchlorate ion (ClO₄⁻), chlorate ion (ClO₃⁻), and acetate ion (CH₃COO⁻). Since all of these are monovalent anions and large in size, affinity to LDH is low, and the LDH containing these has high anion-exchanging property. Consequently, anions other than those described above are not excluded, provided that they satisfy the similar conditions.

Organic solvents having carbon number of 1 to 4, such as alcohols, acetone, tetrahydrofuran, are desirable.
As alcohols, methanol, ethanol, n-propanol, i-propanol (2-propanol), n-butanol, and t-butanol can be used desirably. Since organic solvents having carbon number of 1 to 4 can be handled easily, are easily available, have high volatility and low boiling points, solvents can be removed easily after reaction. In addition, since there is no possibility that carbon dioxide in the air dissolves, thereby generating carbonate ions, secondary incorporation of carbonate ions between LDH layers does not occur.

In an organic solvent containing an acidic compound, the amount of the acidic compound is calculated based on the amount of carbonate ions (COₐ²⁻) existing in carbonate ion-type LDH as the starting material. Since CO₃²⁻ has a valence of -2, the amount of H⁺ (proton) required to compensate it completely is twice the molar quantity of the carbonate ions, namely f=[H⁺]/(2×[COₐ²⁻]), which is interpreted as valence-to-valence conversion.
In the case of amine acid salt, value f was determined, assuming that one proton was released from NRR'R"·HX. In the case of acidic metal salt, value f was determined, assuming that HX of a number of m were generated from MXₘ by hydrolysis. Since the minimum requisite for 100% substitution of CO₃²⁻ is f=1 not only with the amount of protons but also with the amount of anions (X⁻) existing in the system, theoretically f must be 1 or higher to achieve complete substitution.

In an aqueous solvent, weight loss starts to occur before carbonate ions are substituted by other anions completely. Meanwhile, since dissolution of LDH is suppressed more in an organic solvent than in an aqueous solvent, ion exchange occurs before weight loss starts to occur.
In the case of decarbonation using protic acid and alcohol, acidic compound of f=1 or higher is necessary for complete substitution. However, if the amount of acid is excessive, LDH dissolves even in alcoholic solvent, thus causing weight loss. The degree of weight loss varies depending on the type of the alcohol and the acidic compound and water content, but generally, when f=1 to 2, decarbonation is completed successfully without dissolution of LDH. In the case of decarbonation using amine acid salt and alcohol, f=2 to 3 is required, but since acidity is low, weight loss due to dissolution is not observed even if excessive amount of f=6 is added.

An alcoholic solution containing protic acid may be obtained in a state where HCl is dissolved in ethanol, such as hydrochloric acid ethanol. However, even if such solution is not available commercially, perchloric acid methanol solution, for example, can be prepared by adding methanol to a 60% perchloric acid aqueous solution. The final amount of water is 0.1% or lower, which causes no problem.

Use of alcohol solution containing protic acid was found to provide many advantages that cannot be achieved in a protic acid-aqueous solution reaction system. Such advantages include: 1) dissolution of LDH is suppressed, and 2) anions supplied from the acidic compound is sufficient as the amount of anions required.
In addition, when amine acid salt - alcohol reaction system is used, reagent of the amount 2 to 3 times the equivalent amount is necessary, but the use of this reaction system provides the following advantages: 1) even if largely excessive amount is added or contact is made for a long time, dissolution of LDH does not occur, and 2) the amount of anions supplied from the amine acid salt is sufficient as the amount of anions required for anion exchange. When low-acidity amine acid salt is used as in a state of aqueous solution, decarbonation reaction hardly occurs as shown in Examples 9, 10, and 11. Thus, it is not until amine acid salt and alcohol are used in combination that decarbonation reaction is caused.

Acidic compounds can be used in combination, provided that they have common anions. For example, as shown in Example 9, by using acid and amine acid salt in mixed state under the condition where independent use of each only causes partial decarbonation, residual carbonate ions disappeared almost completely. It is also possible to use a mixture obtained by adding neutral salt having common anions to an acidic compound.

As described above, polar solvents such as acetone and tetrahydrofuran can also be used as solvents other than alcohol. Example 8 describes the results of experiment where HClO₄ was used in various solvents. Decarbonation occurred quantitatively as in the case where an alcoholic solvent was used. In the case of HClO₄, however, the amount of dissolution due to excessive acid was larger when solvents other than alcohol were used than when an alcoholic solvent was used. In addition, when amine acid salt is used, the degree of solubility of salt in solvents other than alcohol is generally extremely low, which provides no particular advantage compared to alcohol, but the use is possible. Using mixed solvents as required presents no problem.

As commercially available amine acid salt, hydrochloride is generally used. When using unavailable amine acid salt as a reagent, equivalent amount of acid and amine can be mixed in a solvent to synthesize a desired amine acid salt for use. When acidity of the acid is high, by adding the equivalent amount of amine, the acidity can be decreased.

In decarbonation, carbonate ions combine with protons, and are discharged from between LDH layers, thus generating carbon dioxide. This reaction is represented by chemical formula (4) shown below:

[Chemical formula 11]

CO₃²⁻+2H⁺→CO₂↑+H₂O (4)

Since this reaction is an equilibrium reaction, it is desirable that generated carbon dioxide (CO₂) be taken out of the system by allowing the reaction to occur in nitrogen gas flow, for example. In decarbonation, carbon dioxide in the air does not enter into the organic solvent, thus generating carbonate ions, and in addition, when strong acid exists in the solvent, the equilibrium shifts to the side of CO₂ emission. Since the carbon dioxide concentration in the air is as low as 400 ppm, no problems are presented even if the reaction is performed in air flow instead of nitrogen gas flow (Example 13). However, in the case of amine acid salt, residual carbonate ions of 10 to 20% were found probably because CO₂ emission in reaction formula (4) was hindered due to the effect of carbon dioxide in the air in the case of low-acidity amine acid salt. It is therefore desirable that reaction using amine acid salt be caused in nitrogen gas flow. In addition, since solubility of CO₂ in solvent decreases by increasing temperature, a method of increasing temperature may also be used, or the reaction may be performed in nitrogen gas flow.

In decarbonation, it is desirable that no water exists. H₂O generated at the same time in the reaction represented by chemical formula (4) has no effect because its amount is small. Example 8 exhibits the results of experiment performed using a solvent prepared by adding water of 10% by weight to alcohol. In this case quantitative reaction occurred although the amount of weight lost was larger than the case where pure alcohol was used, meaning that addition of water of such amount presented no problems to the decarbonation. Consequently, the alcohol to be used need not be dehydrated specially.
Alcohol can be used for washing in filtration process after reaction. Since alcohol hardly dissolves carbonate ions, unlike water, there is no need to perform special degassing operation (operation of removing dissolved carbon dioxide by boiling).

Supplemental description of acidity will be given below. Since acidity indicates the ease of discharging protons, acid dissociation constant (pKa), which is an index of ease of discharging acidic protons in a solvent, can be referred to as a guideline. The smaller the pKa value, the stronger the acidity. For example, hydrochloric acid exhibits the value of -8. Meanwhile, the value of amine acid salt, which exhibits low acidity, mostly falls within a range from 0 to 14. The acid dissociation constant varies depending on solvents, and most of the measurement values are those obtained with water used as a solvent. Consequently, it does not have quantitative meaning in solvents other than water, but it can be used as an index of the degree of ease of discharging protons. The "protic acids" described in this specification exhibit values of 0 pKa or lower, and the values of the "amine acid salt" fall within a range from 0 to 14 pKa. Consequently, since it is easily assumable that similar decarbonation occurs with compounds not listed in the present invention, provided that the acidic compound has pKa value of 14 or lower, these compounds are not excluded.

Of the Examples shown below, reaction was caused in Examples 1 to 15 under room temperature conditions (20 to 25°C). Generally, since the pKa value depends on temperatures, by changing temperatures, acidity can be adjusted. Although increase in temperature does not necessarily result in increase in acidity, temperature increase has a helpful effect in increasing the reaction rate. Examples where temperature was increased are shown in Examples 16 to 18.
When NH₄Cl was used at room temperatures (20 to 25°C) as reaction temperature, 50% residual carbonate ions were found when f=1 (Example 9). However, by increasing the reaction temperature to 40°C, the residual carbonate ions decreased to 2% (Example 18), probably because the increase in reaction temperature decreased pKa value, increasing acidity and thus promoting decarbonation. Similar results were obtained when ammonium acetate (Example 16) and acetic acid (Example 17) were used.
The present invention defined the reaction temperature to fall within a range from 10°C or higher but not exceeding 50°C. The reasons why this temperature range was selected are as follows: if temperatures of 50°C or higher are selected, (1) there is a possibility that weight loss occurs by dissolution depending on the type of acid, (2) heating operation and cooling operation for preventing evaporation of alcohol and acidic compounds are required, and (3) special heating is unnecessary in many cases, and if no heating is performed, it is more economical. However, if special advantages are ensured by increasing the reaction rate or acidity, reaction temperatures of 50°C or higher may be adopted.
The present invention selected 10°C as the lowest temperature because commonsense room temperature is 10°C or higher. If advantages of selecting temperatures lower than 10°C, such as decrease in acidity, are ensured, causing reactions to occur at lower temperatures are not excluded, provided that the temperature is higher than the freezing temperature of organic solvents not allowing the solution to freeze.
As described above, temperatures can be selected arbitrarily or as required although optimum temperature range varies depending on pKa value. Generally, however, temperatures 10°C or higher and lower than 50°C, more preferably room temperatures (20°C or higher and up to 25°C) are desirable.

In the process of decarbonation, carbonate ion-type LDH is immersed in an organic solvent containing acidic compound to allow protons (H⁺) and anions (X⁻) to contact the LDH.

As described above, the present invention allows a carbonate ion-type LDH to contact an organic solvent containing an acidic compound, thereby converting the hardly anion-exchanging carbonate ion-type LDH to highly anion-exchanging LDH by decarbonation at room temperatures and in short time, without changing particle size or uniformity.

The present invention will hereinafter be described more specifically by referring to Examples, but the present invention is not limited to the Examples shown.

### Example 1

### (Perchloric acid-methanol system; MgAl-LDH3)

Commercially available hydrotalcite represented by general formula Mg₃Al(OH)₈(CO₃²⁻)_{0.5}·2H₂O (DHT-6, Kyowa Chemical Industry Co., Ltd.) was used. Particle size distribution was approximately from 0.1 to 1 µm, and Mg/Al molar ratio was 2.99 (±0.06). This LDH is designated as CO₃²⁻MgAl-LDH3.

100 mg of CO₃²⁻MgAl-LDH3 was weighed and placed in a three-neck flask, to which 45 mL of methanol was poured to prepare suspension. Perchloric acid-methanol solutions of various concentrations were prepared by dissolving perchloric acid (60%) to 5 mL of methanol.
Perchloric acid-methanol solution was dropped onto CO₃²⁻MgAl-LDH3 suspension while the liquid was being agitated with a magnetic stirrer in nitrogen gas flow (0.5 L/min.), and reaction was performed at room temperatures (20 to 25°C) for one hour with continuous stirring.
Then the solution was filtered in nitrogen gas flow with a 0.2 µm membrane filter, and the deposits were washed thoroughly with methanol. The filtered out deposits were collected and recovered, the pressure was decreased immediately, the deposits were dried in vacuum for one hour or longer, and white powder was obtained.
For comparison, experiment was conducted using degassed water (obtained by boiling ion-exchanged water for 15 minutes or longer to remove carbon dioxide, hereinafter referred to simply as water), instead of methanol.

In this experiment, perchloric acid of the amounts satisfying f=[H⁺]/(2×[CO₃²⁻])=0.5, 0.75, 1.0, 1.25, 1.5, 2.0, 3.0, 4.0, 5.0, and 8.0 were used. For example, when f=1, the amount of perchloric acid used was 56 mg.

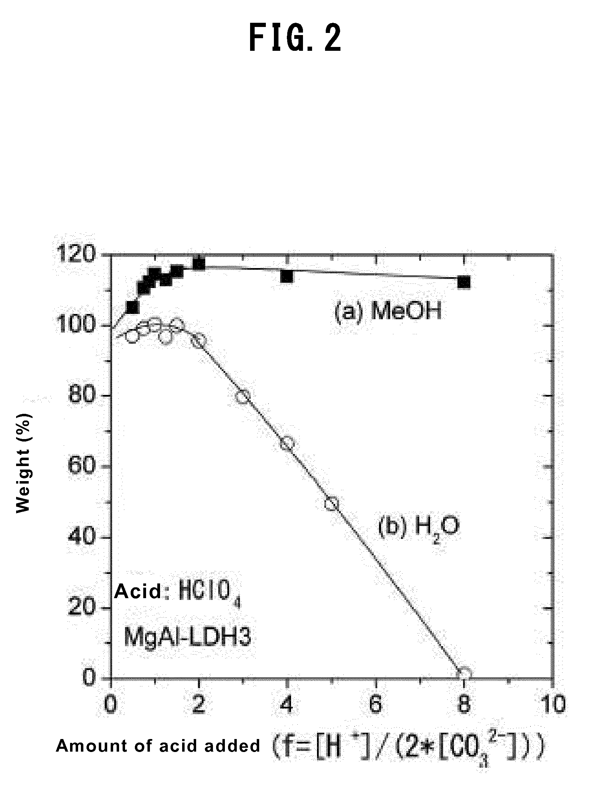

FIG. 2 shows the relation between the weight of product and value f.
In the case of methanol (FIG. 2 (a)), the weight of the product rarely changed even if value f was changed from 1 to 8. In the case of water (FIG. 2 (b)), dissolution of CO₃²⁻MgAl-LDH3 started to occur when value f was 2, and most of the product had been lost by dissolution when f=8.
The weight of the product increased when value f of methanol was 0.5 to 1.0 because CO₃²⁻ was substituted by ClO₄⁻, and thus the molecular weight increased. Assuming that CO₃²⁻ is substituted by ClO₄⁻ completely, and assuming the recovery rate to be 95%, the weight should be approximately 116%. The weight reached this value when f=1 or larger when methanol was used, which coincides with this assumed value.

Infrared absorption profile obtained by Fourier transform infrared spectroscopy (FTIR) was studied and the following results were obtained: with methanol, when f=1.0, absorption due to carbonate ions (COₐ²⁻) remaining by as low as several % was found at 1370 cm⁻¹, but when f=1.25, absorption by carbonate ions (COₐ²⁻) at 1370 cm⁻¹ was lost and intense absorption characteristic of ClO₄⁻ was found in a range from 1090 to 1100 cm⁻¹, which confirmed that high-purity ClO₄-MgAl-LDH3 had been prepared.

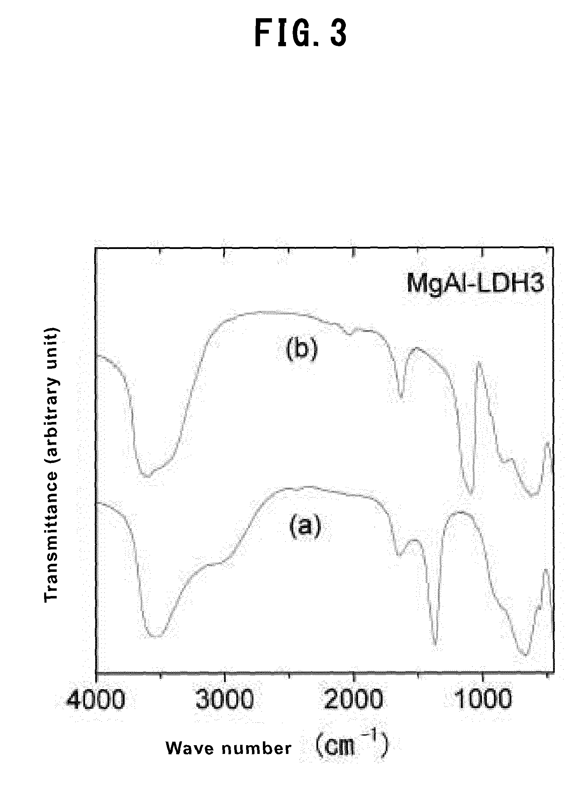

FIG. 3 shows the Fourier transform infrared spectrum (transmittance), where (a) and (b) respectively show the FTIR profile of carbonate ion-type MgAl-LDH3 and that of ClO₄-type LDH3 obtained under f=1.25 conditions. In (b), intense absorption due to perchlorate ions (1090 to 1100 cm⁻¹) was found, but absorption due to carbonate ions (1370 cm⁻¹) was not found, which confirms that there were no residual carbonate ions.

With methanol, ClO₄⁻MgAl-LDH3 was obtained in a range where f=1.25 to 8, and existence of other phases was not found.
Meanwhile, when water was used, even when f=2, existence of residual carbonate ions by nearly 30% was found, and when f=3 or higher, the residual carbonate ions were lost, and generation of ClO₄⁻MgAl-LDH3 was confirmed. However, as shown in FIG. 2, when f=3, weight loss was approximately 20%, meaning that dissolution of LDH itself was occurring. As described above, when water was used as a solvent, there were no experimental conditions for producing LDH without involving weight loss due to dissolution and without existence of residual carbonate ions.

Since there was a possibility that metal ions dissolve, thus causing Mg/Al ratio to change, Mg and Al analysis was conducted by inductively-coupled plasma (ICP) spectrometry to examine the Mg/Al ratio.

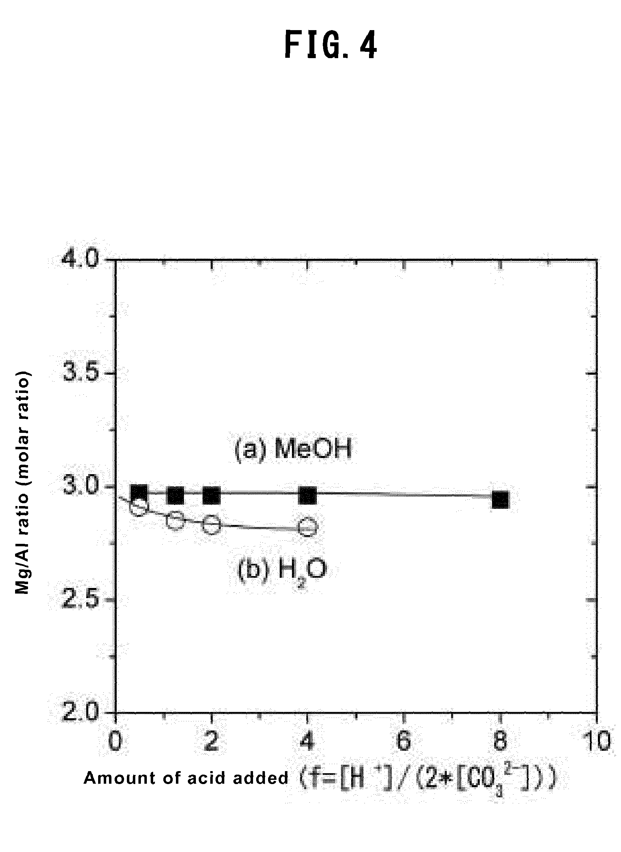

FIG. 4 shows the results obtained. In the FIG. 4, (a) shows the case where reaction was made to occur in methanol, and (b) shows the case where reaction was made to occur in water. The decrease in Mg/Al ratio indicates that Mg eluted selectively from LDH.
The Mg/Al ratio did not change almost at all in the reaction in methanol, but when water was used, the Mg/Al ratio slightly decreased, with the value decreased to 2.82 when f=4. The reason for this is probably because Mg, which is vulnerable to acid, eluted selectively.

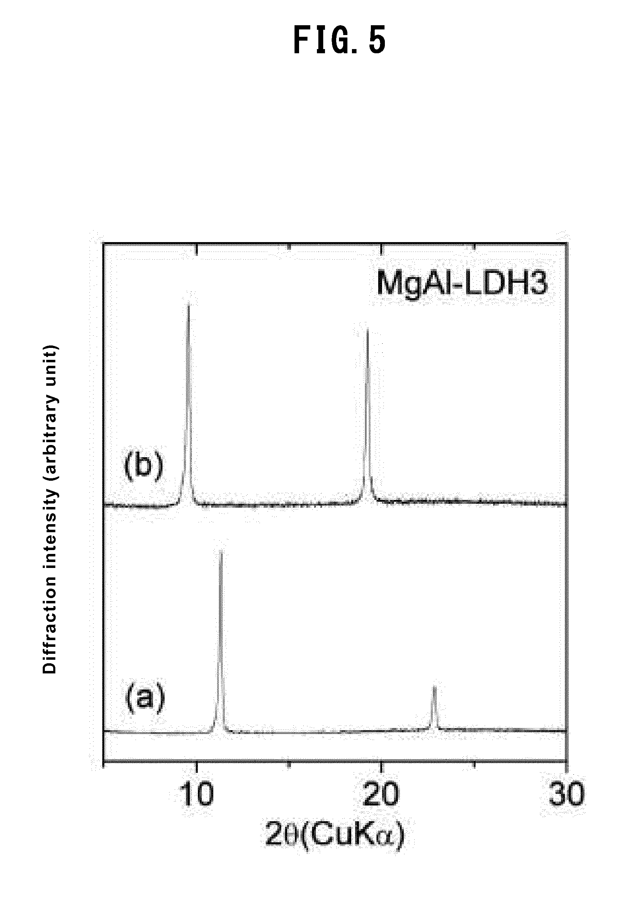

The sample obtained by the reaction caused in methanol under f=1.25 condition was subjected to powder X-ray diffraction measurement. The results are shown in FIG. 5, where (a) shows the measurement result of carbonate ion-type MgAl-LDH3, and (b) shows that of LDH after the reaction. It is apparent that the angle of diffraction peak has shifted as a result of substitution of carbonate ions by perchlorate ions.
(b) exhibited basal spacing of 0.915 nm (measured at RH=10%), which is mostly identical to the value in Non-patent Literature 7 (0.917 nm), there are no other peaks due to other phases, and its diffraction peaks are not broad, which indicated that good-quality ClO₄-MgAl-LDH3 without change in crystallinity has been obtained.

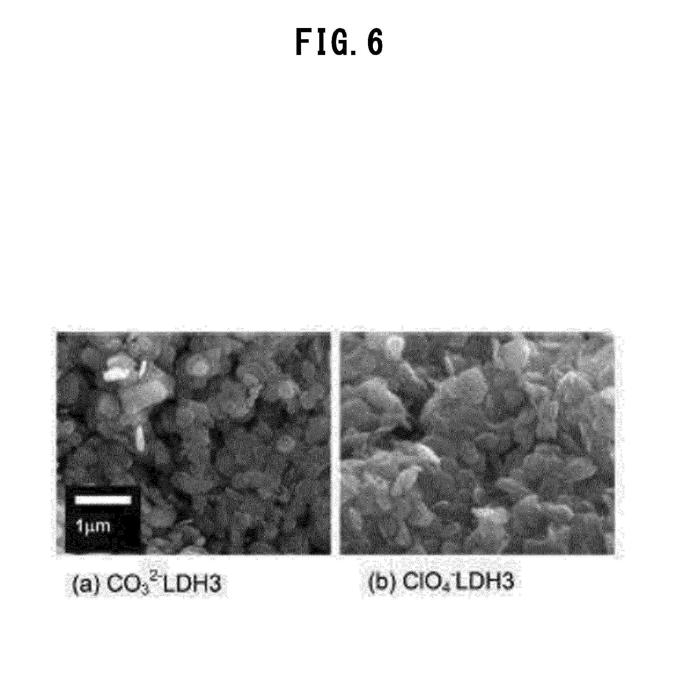

The shape of CO₃²⁻-type MgAl-LDH3 and that of ClO₄⁻-type MgAl-LDH3 obtained by causing reaction to occur in methanol and under f=1.25 conditions were observed under a scanning electron microscope (SEM). FIG. 6 shows the results. Perchlorate ion-type LDH (FIG. 6 (b)) was found to have succeeded the shape of carbonate ion-type LDH (FIG. 6 (a)), namely the starting material, exhibiting that conversion occurred while the outer shape was maintained in ion exchange. The bar in the FIG. represents 1 µm, and the two images are in the same magnification. No change occurred to particle size or shape, and no generation of holes was found, which indicates that dissolution of LDH itself due to conversion reaction did not occur.

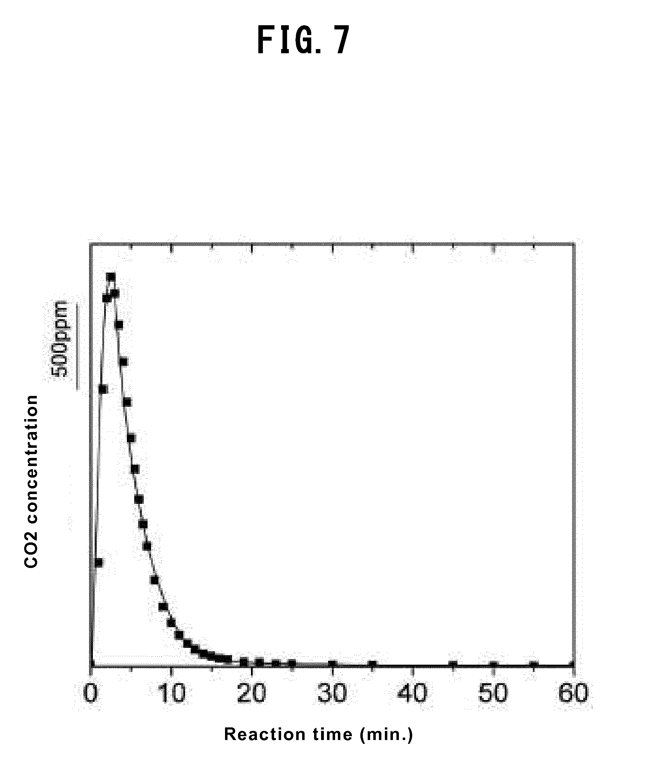

To examine reaction time, reaction was made to occur in methanol under f=1.25 condition, and the carbon dioxide concentration in outlet nitrogen was measured using a carbon dioxide concentration meter (TESTO-535). FIG. 7 shows the results obtained. In two to four minutes after perchloric acid-methanol solution was added, the amount of carbon dioxide exhibited the maximum value, and in 20 minutes, almost no carbon dioxide was detected, which indicates that one hour is sufficient as reaction time.

For comparison, similar experiments were conducted using a methanol solution of NaClO₄, which is a neutral salt. Experiment was conducted with the reaction time set at two hours, and by adding NaClO₄ of the amount equivalent to f=[NaClO₄]/(2×[CO₃²⁻]=6. No carbon dioxide was found in outlet nitrogen gas, and although introduction of small amount of ClO₄⁻ due to ion exchange was found, residual carbonate ions by as high as 70 to 80% was found, which indicates that introduction of ClO₄⁻ or decarbonation did not occur thoroughly unless acid was used.
Example 8 summarized the experiments using other solvents.

### Example 2

### (Perchloric acid-methanol system; MgAl-LDH2)

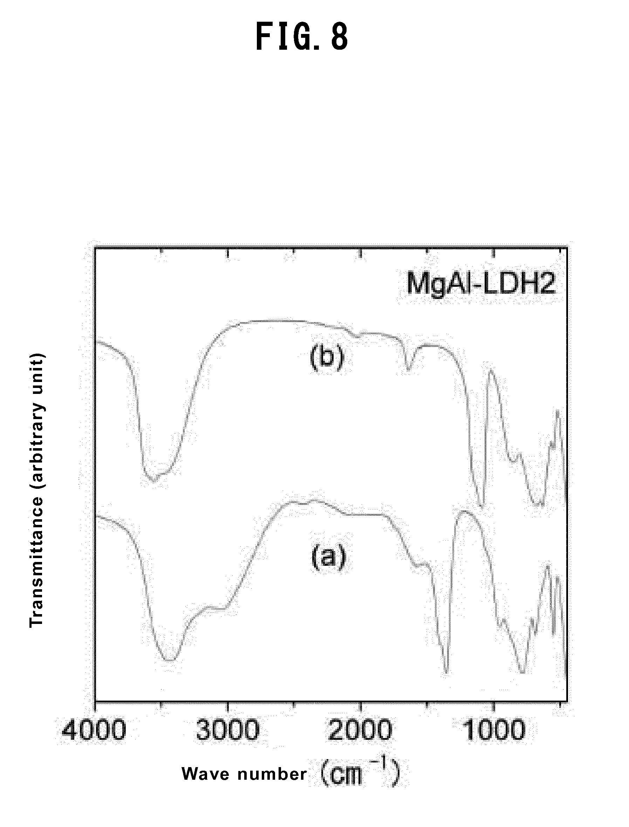

In this Example, LDH represented by general formula Mg₂Al(OH)₆(CO₃²⁻)_{0.5}·2H₂O was synthesized for use.
The Mg/Al molar ratio was approximately 2, and layer charge density was higher than that of MgAl-LDH3 in Example 1. Synthesis was performed by following the method in Patent Literature 3. Specifically, 508 mg of MgCl₂·6H₂O and 302 mg of AlCl₃·6H₂O were weighed, to which ion-exchanged water was added to prepare a 12.5 mL solution. To the solution, 12.5 mL of aqueous solution prepared by dissolving 613 mg of hexamethylenetetramine was added, the mixed solution was filtered with a 0.2 µm membrane filter, poured into a 50 mL pressure-tight Teflon^{®} container, which was housed in a pressure-tight stainless container and sealed, hydrothermal treatment was performed at 140°C for one day. After filtering and washing, the solution was dried in vacuum and 279 mg of white powder was obtained.
The particle size of the obtained product (designated as CO₃²⁻MgAl-LDH2) was approximately 0.5 to 2 µm, and its Mg/Al molar ratio was 1.94 (±0.04). FIG. 8 (a) shows the infrared absorption spectrum of CO₃²⁻MgAl-LDH2.

Reaction was made to occur in methanol containing perchloric acid. 80.7 mg of CO₃²⁻MgAl-LDH2 was weighed and poured in a three-neck flask, to which 45 mL of methanol was added to prepare suspension. Perchloric acid-methanol solutions of various concentrations were prepared by dissolving perchloric acid (60%) in 5 mL of methanol. While CO₃²⁻MgAl-LDH3 suspended liquid was being agitated with a magnetic stirrer in nitrogen gas flow (0.5 L/min.), perchloric acid-methanol solution was dropped to it. The reaction was performed at room temperatures (20 to 25°) for one hour with continuous stirring of the suspension. Filtration and drying were performed under the same conditions as Example 1, and white powder was obtained.

Perchloric acid of the amount satisfying f=0.5, 0.75, 0.875, 1.0, 1.25, 1.5, 2.0, 4.0, and 8.0 was used. The amount of perchloric acid satisfying f=1 was 56 mg.

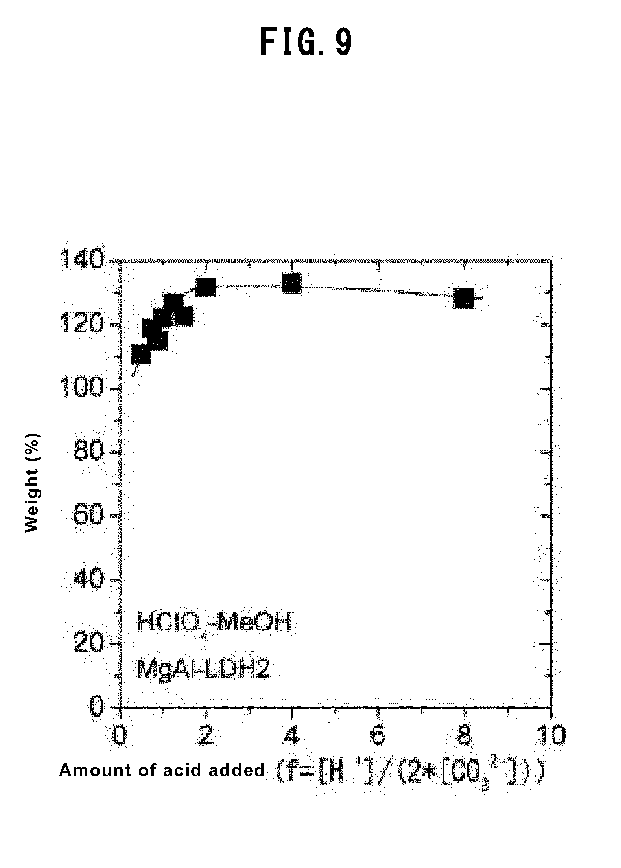

FIG. 9 shows the relation between value f and the weight of the product obtained. When value f ranged from 0.5 to 8, change in weight was rarely found, meaning that weight loss hardly occurred even if excessive amount of acid was added. The weight increased when value f increased from 0.5 to 1.0 due to increase in molecular weight resulting from substitution of CO₃²⁻ by ClO₄⁻. Assuming that CO₃²⁻ has been substituted by ClO₄⁻ completely, the weight is expected to increase to approximately 129%. This Example mostly coincides with this value.

The sample obtained by the reaction caused in methanol under f=1.25 condition exhibited basal spacing of 0.879 nm (measured at RH=0%) by powder X-ray diffraction, which is nearly identical to the value in Non-patent Literature 7 (0.881 nm), and the shape of its diffraction peaks exhibited that almost no change occurred in crystallinity, meaning that good-quality ClO₄⁻MgAl-LDH2 had been produced. The infrared absorption profile obtained by FTIR also exhibited that absorption due to carbonate ions at 1360 cm⁻¹ had been lost when f=1.25, and intense absorption characteristic of ClO₄⁻ appeared at 1090 cm⁻¹, which means that high-purity ClO₄⁻LDH2 had been generated (FIG. 8 (b)). As in the case of Example 1, (b) did not exhibit absorption due to carbonate ions (1360 cm⁻¹), which indicates that there are no residual carbonate ions.

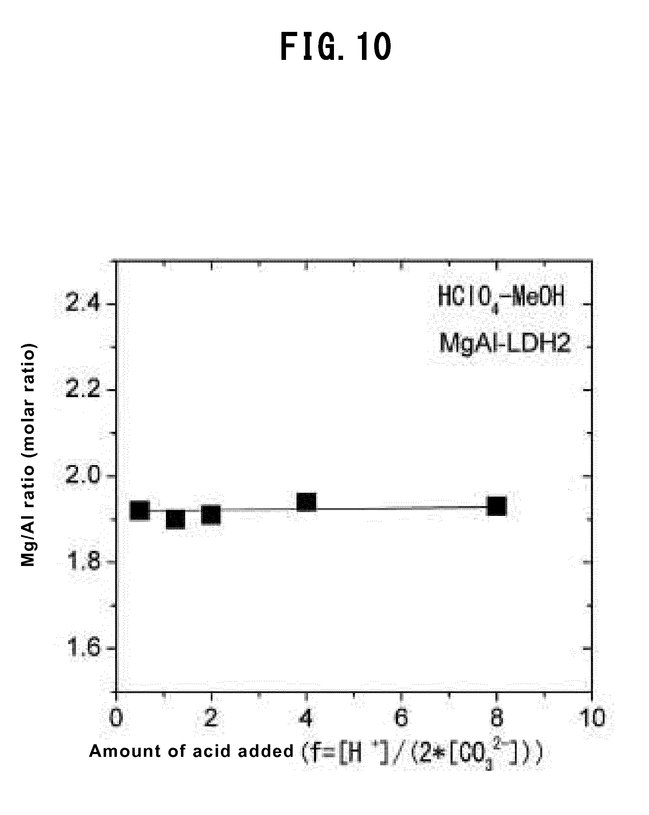

Mg and Al were analyzed by ICP spectrometry to examine the Mg/Al ratio. As shown in FIG. 10, the Mg/Al ratio rarely changed and no selective elution was observed in the reaction using methanol.

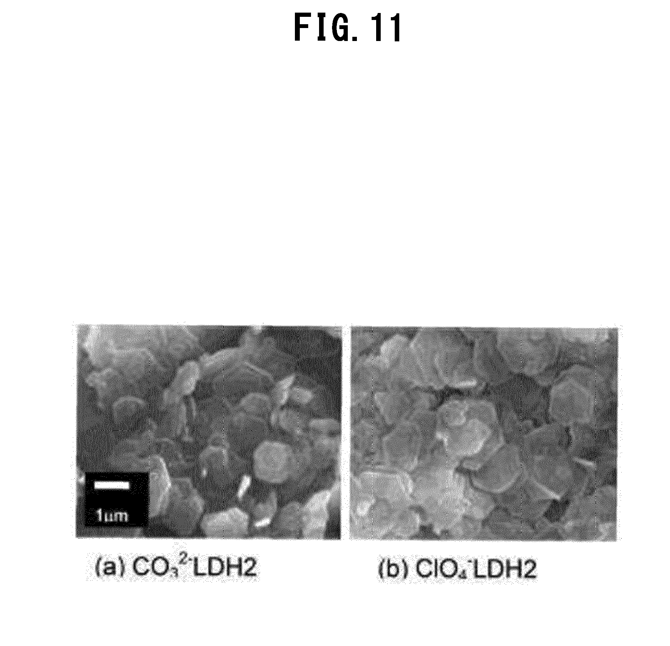

The shape of the CO₃²⁻-type MgAl-LDH2 and that of ClO₄⁻-type MgAl-LDH2 obtained by causing reaction in methanol under f=1.25 condition were observed under a scanning electron microscope (SEM) (FIG. 11). The perchlorate ion-type LDH (FIG. 11 (b)) succeeds the shape of hexagonal plate of the carbonate ion-type LDH (FIG. 11 (a)), which suggests that conversion was performed by ion exchange while the outer shape was maintained and that dissolution of LDH itself did not occur.

To find the time required for reaction, reaction was caused in methanol under f=1.25 condition, and the concentration of carbon dioxide in the outlet gas was measured. As a result, it was found, in this MgAl-LDH also, that as in the case of Example 1, the carbon dioxide concentration exhibited the maximum value in 2 to 4 minutes after the perchloric acid-methanol solution was added, and almost no amount was detected in 20 minutes, which suggests that one hour is sufficient as the reaction time.

### Example 3

### (Hydrochloric acid-ethanol system; MgAl-LDH3)

Experiments were conducted using CO₃²⁻MgAl-LDH3 hydrochloric acid, and ethanol as alcohol.
100 mg of CO₃²⁻MgAl-LDH3 was weighed and poured in a three-neck flask, to which ethanol was added to prepare a suspended liquid. A hydrochloric acid-ethanol solution (0.1 mol/L) was dropped to the CO₃²⁻MgAl-LDH3 suspension in nitrogen gas flow (0.5L/min.) while the liquid was being agitated with a magnetic stirrer, and furthermore reaction was performed at room temperatures (20 to 25°C) for one hour with continuous stirring of the suspension. Filtration and drying were performed under the same conditions as Example 1, and white powder was obtained.

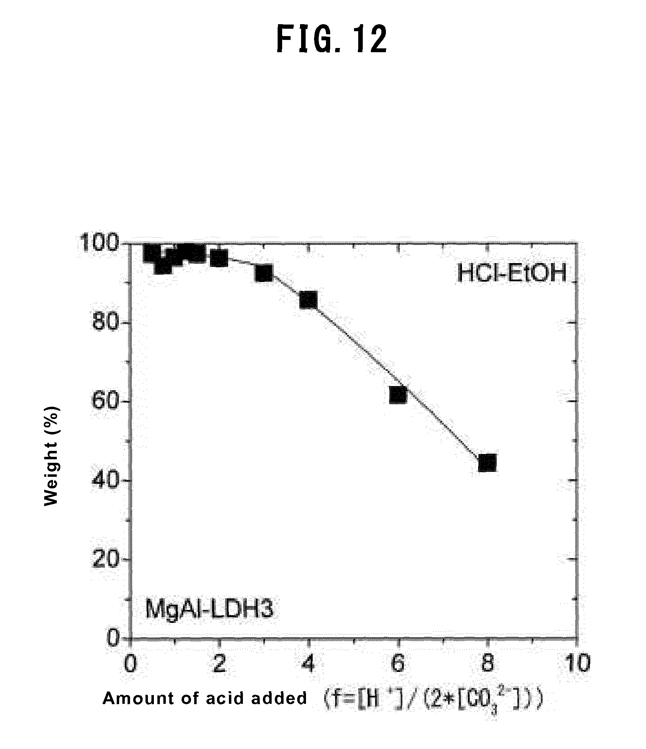

The hydrochloric acid-ethanol solution (0.1 mol/L) of the following amounts was dropped: f=0.5, 0.75, 1.0, 1.25, 1.5, 2.0, 3.0, 4.0, 6.0, and 8.0. f=1 is equivalent to 3.33 mL of hydrochloric acid-ethanol solution. The amount of ethanol for preparing CO₃²⁻MgAl-LDH3 suspended liquid is the amount obtained by subtracting the amount of solution to be dropped from 50 mL, and adjustment was made so that the entire amount became 50 mL after dropping.
When ethanol was used, as shown in FIG. 12, the weight of the product obtained exhibited little change until f became 2, and dissolution began when f became 2 or larger.

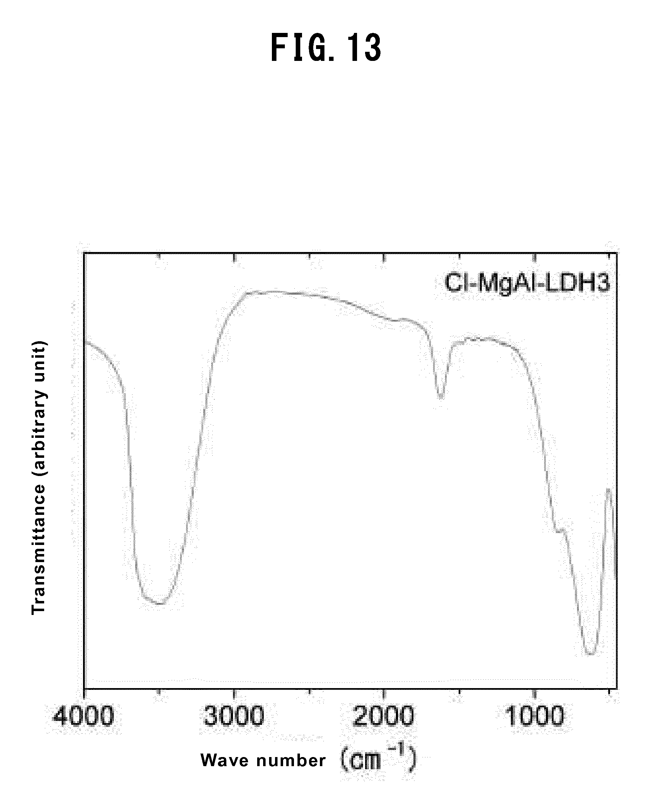

When f=1.25 or larger, Cl-LDH containing no residual carbonate ions was obtained. FIG. 13 shows the infrared absorption profile by FTIR (f=1.5). The absorption due to carbonate ions (CO₃²⁻) at 1370 cm⁻¹ was lost, which indicates that high-purity Cl-LDH had been produced. Since Cl⁻ does not exhibit absorption characteristic in infrared absorption, no new absorption peaks appeared. Cl-MgAl-LDH3 was found to have been generated when f=1.25 or larger (up to f=8.0.)

Mg and Al were analyzed by ICP spectrometry to determine the Mg/Al ratio. In a range where weight loss was observed (dropping of acid of the amount exceeding f=2.0), the Mg/Al ratio exhibited almost no change, which indicates that even when dissolution of the LDH occurred, Mg did not decrease selectively, but both Mg and Al dissolved, resulting in weight loss.

The sample obtained by the reaction caused in ethanol under f=1.25 condition was subjected to powder X-ray diffraction measurement. As a result, basal spacing was found to be 0.795 nm (measured at RH=20%), which was mostly identical to the value in Non-patent Literature 7 (0.795 at RH=10%), no peaks by other phases were found, and its diffraction peaks were not broad, all of which indicate that good-quality Cl-MgAl-LDH3 without change in crystallinity had been produced.

To examine the time required for reaction, reaction was caused in ethanol under f=1.25 condition, and the concentration of carbon dioxide in outlet nitrogen was measured. As a result, as in Examples 1 and 2, in 2 to 5 minutes after hydrochloric acid-ethanol solution was added, the amount of carbon dioxide exhibited the maximum value, and almost no amount was detected after 20 minutes, which indicates that one hour is sufficient as the reaction time.

Using methanol and i-propanol (2-propanol), instead of ethanol, similar experiment was conducted, and similar results were obtained with regard to the reaction time, percentage of the amount of decarbonated ions, and change in weight, which indicates that the types of alcohols rarely affect decarbonation using acid.

Data obtained by causing reaction to occur using water as a solvent was already described in Example 2 of Patent Literature 1. According to this data, approximately 60% residual carbonate ions were found even if the hydrochloric acid concentration at which weight loss was observed was reached, and when the residual carbonate ions decreased to 5% or lower, weight loss by 20 to 30% was observed. Consequently, under the condition where reaction is performed in an aqueous solvent using hydrochloric acid only, it is not possible to eliminate the weight loss of LDH due to dissolution and prevent carbonate ions from residing in the LDH.
When hydrochloric acid-ethanol solution was used, dissolution started to occur when f exceeded 2, meaning that dissolution of the LDH started to occur even at a stage of low acid concentrations. In the case of the reaction using perchloric acid and methanol in Examples 1 and 2, since residual carbonate ions were found to have been lost in a range where f=1.25 to 2, it was found that conditions existed where LDH could be produced without causing weight loss due to dissolution to occur, or without causing decarbonation to occur, unlike the reaction using water as a solvent.

### Example 4

### (Nitric acid-methanol system; MgAl-LDH3)

Experiments were conducted using CO₃²⁻MgAl-LDH3, nitric acid, and methanol.
100 mg of CO₃²⁻MgAl-LDH3 was weighed and poured in a three-neck flask, to which 45 mL of methanol was added to prepare a suspended liquid. 5 mL of nitric acid-methanol solution of various concentrations was dropped into the CO₃²⁻MgAl-LDH3 suspended liquid in nitrogen gas flow (0.5L/min.) while the suspension was being agitated with a magnetic stirrer, and reaction was performed at room temperatures (20 to 25°C) for one hour with continuous stirring of the suspension.
Filtration and drying were performed under the same conditions as Example 1, and white powder was obtained.
It was confirmed by measuring the carbon dioxide concentrations in outlet nitrogen gas that one hour was sufficient as the reaction time.

The nitric acid-methanol solution to be dropped was prepared by adding 5 mL of methanol to 1N nitric acid solution so that f=0.5, 0.75, 1.0. 1.25, 1.5, 2.0, 3.0, 4.0, and 5.0 were satisfied. The amount of 1N nitric acid is equivalent to 0.33 mL when f=1.

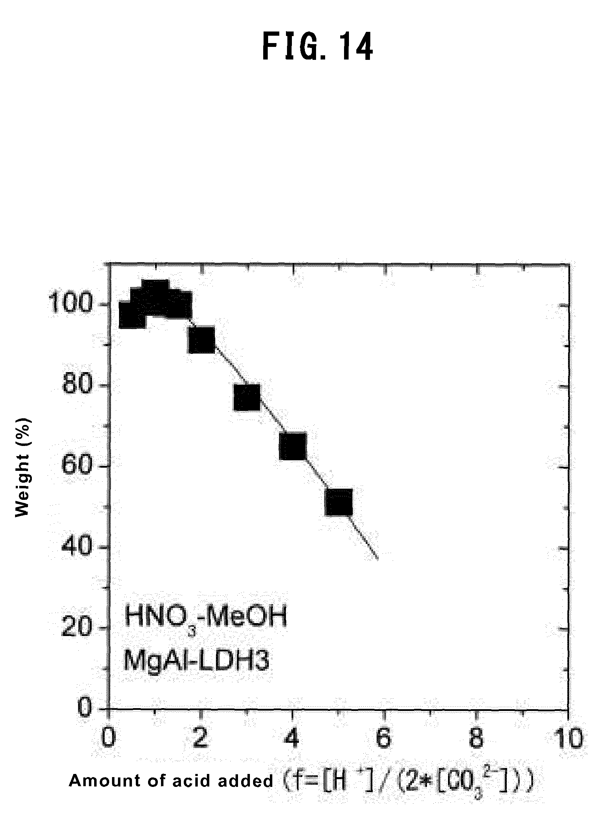

The weight of the product obtained exhibited decrease when the acid of the amount exceeding f=2 was added, which indicates that dissolution of LDH was starting to occur (FIG. 14).

In the infrared absorption profile obtained by Fourier transform infrared spectroscopy (FTIR), when f=1.25, absorption due to carbonate ions (CO₃²⁻) at 1360 cm⁻¹ was lost and absorption due to nitrate ions (NO₃⁻) appeared at 1380 cm⁻¹.
The sample obtained under f=1.25 condition was subjected to powder X-ray diffraction measurement, and as a result the basal spacing was found to be 0.835 nm (measured at RH=30%), which was mostly identical to the value in Non-patent Literature 7, there were no diffraction peaks due to other phases, and its diffraction peaks were not broad, suggesting that good-quality NO₃⁻MgAl-LDH3 without change in crystallinity had been produced. When f=1.25 or larger (up to f=5.0) also, NO₃⁻MgAl-LDH3 was found to have been produced similarly.

To examine the amount of residual CO₃²⁻ further in detail, carbon analysis was conducted using a carbon analyzer (CS-444LS, LECO) regarding f=1.0, 1.25, 1.50, and 2.0. As a result, with all of the samples, the residual CO₃²⁻ was 5% at the highest, meaning that there was little residual CO₃²⁻.

When nitric acid-methanol solution was used, dissolution started to occur when f=2 was exceeded, meaning that as in the case of Example 3, dissolution started to occur at a stage of relatively low acid concentration.
However, since the residual carbonate ions had already been lost with the amount of f=1, it was found that reaction conditions existed where LDH could be produced without dissolution and residual carbonate ions, unlike the reaction using water as a solvent.

### Example 5

### (Perchloric acid-methanol system; NiAl-LDH2)

In Examples 5, 6, and 7, experiments were conducted regarding LDH containing Ni ions and Al ions. Specifically, carbonate ion-type NiAl-LDHs were synthesized with Ni-Al ratio changed, and converted into perchlorate ion-type LDHs using a perchloric acid-methanol solution. Perchloric acid of the amount 1.25 times the reference amount, namely the same molar quantity as that of the carbonate ion of the carbonate ion-type LDH in valence-to-valence conversion, was used.

Carbonate ion-type NiAl-LDH was synthesized by the following method.
A 12.5 mL mixed solution prepared by dissolving 364 mg of Ni(NO₃)₂·6H₂O, 235 mg of Al(NO₃)₃·9H₂O, and 307 mg of hexamethylenetetramine was poured in a 25 mL pressure-tight Teflon container, which was housed in a pressure-tight stainless steel container and sealed, and hydrothermal treatment was performed at 180°C for 3 days. By filtration, washing, and drying, 185 mg of blue-green powder was obtained. The particle size ranged from 0.3 to 0.6 µm, and the Ni-Al molar ratio was found by ICP analysis to be 2.00 (±0.06). This LDH is designated as CO₃²⁻NiAl-LDH2.

Conversion of CO₃²⁻NiAl-LDH2 into perchlorate ion type was performed using a perchloric acid-alcohol solution.
155 mg of CO₃²-NiAl-LDH2 was weighed, to which 45 mL of methanol was added to prepare a suspended liquid. While this suspended liquid was being agitated using a magnetic stirrer in nitrogen gas flow, a solution prepared by dissolving 105 mg of perchloric acid (60%) of the amount equivalent to f=1.25 in 5 mL of methanol was dropped onto this suspended liquid, and furthermore reaction was performed at 25°C for one hour with continuous stirring.
By filtration and drying performed under the same conditions as Example 1, 180 mg of blue-green powder was obtained. By ICP analysis performed, the Ni-Al molar ratio was found to be the same as that of the starting material.

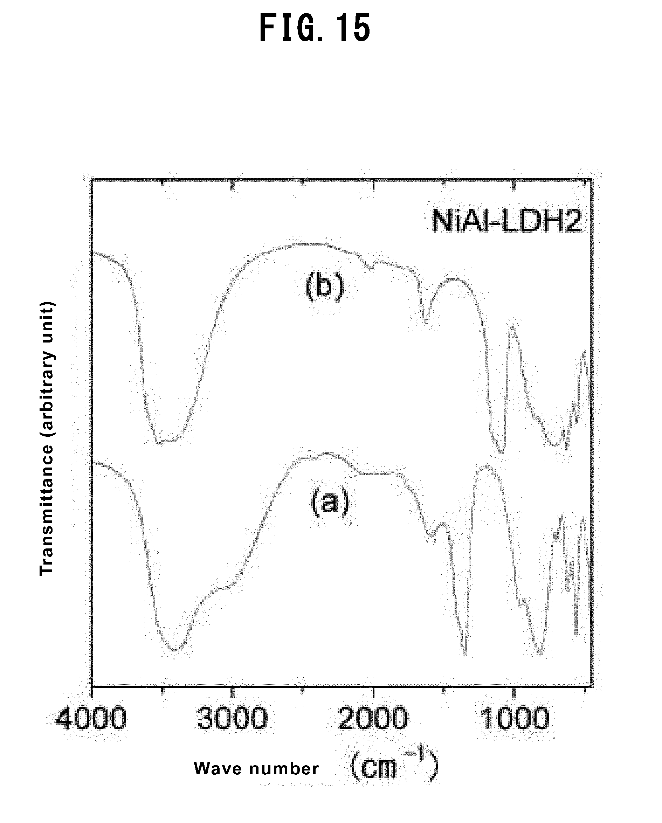

FIG. 15 shows the infrared absorption profiles of LDHs by the Fourier transform infrared spectroscopy (FTIR), where (a) shows the profile of carbonate ion type, and (b) shows that of ClO₄⁻ type. Each of them exhibited absorption characteristics. With obtained ClO₄⁻ type, absorption due to carbonate ions at 1360 cm⁻¹ was lost, and intense absorption characteristics of ClO₄⁻ were observed within the range from 1090 to 1100 cm⁻¹, which indicates that high-purity ClO₄-LDH had been produced.

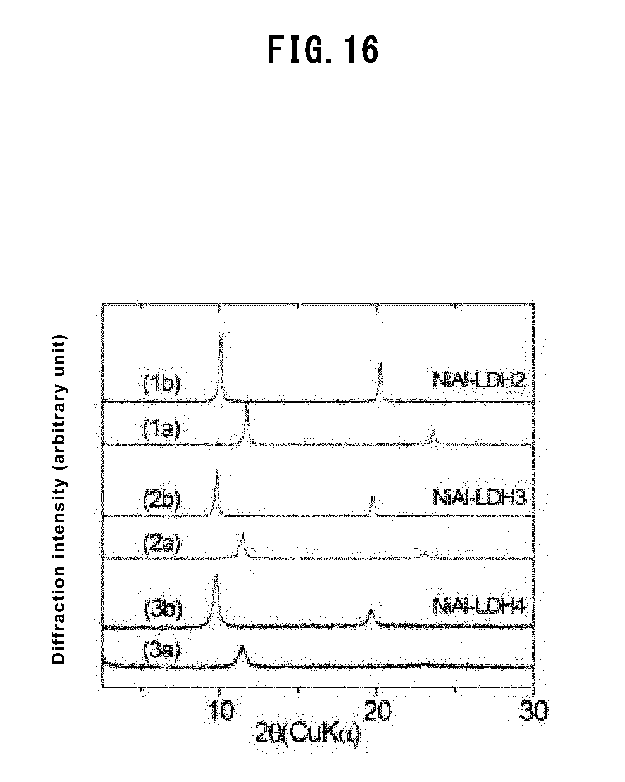

(1a) and (1b) of FIG. 16 show the results of powder X-ray diffraction measurement. The measurement was performed in nitrogen atmosphere (measured after being retained in nitrogen atmosphere at RH=0% for 15 minutes). FIG. 16 (1a) shows the profile of CO₃²⁻³ type, and (1b) shows that of ClO₄⁻ type. (1b) does not exhibit reflection by CO₃²⁻ type, meaning that complete conversion into ClO₄⁻ type has been performed.

The shape of CO₃²⁻-type and ClO₄⁻-type NiAl-LDHs were observed under a scanning electron microscope (SEM). The perchlorate ion-type LDH succeeded the shape of the carbonate ion-type LDH, the starting material, which indicates that conversion had been performed by ion exchange while the outer shape was maintained.
From the above, decarbonation was found to occur, also with the LDHs containing metallic ions other than MgAl-LDH, as in the case of MgAl-LDH.

### Example 6

### (Perchloric acid-methanol system; NiAl-LDH3)

CO₃²-NiAl-LDH3, which had larger Ni content (Ni/Al=3) than CO₃²⁻NiAl-DH2 in Example 5, was synthesized.
12.5 mL of a mixed solution prepared by dissolving 409 mg of Ni(NO₃)₂·6H₂O, 176 mg of Al(NO₃)₃·9H₂O, and 254 mg of urea was poured in a 25 mL pressure-tight Teflon^{®} container, which was housed in a pressure-tight stainless steel container and sealed, and hydrothermal treatment was performed at 180°C for 3 days. By filtration, washing, and drying, 188 mg of product was obtained. The particle size ranged from 0.2 to 0.6 µm, and the Ni-Al molar ratio was found to be 2.91 (±0.06).

As in the case of Example 5, CO₃²⁻NiAl-LDH3 was converted into perchlorate ion type. 268 mg of CO₃²⁻NiAl-LDH3 was weighed, to which 45 mL of methanol was added to prepare suspended liquid. While the suspended liquid was being agitated in nitrogen gas flow using a magnetic stirrer, a solution prepared by dissolving 140 mg of perchloric acid (60%) in 5 mL of methanol was dropped onto the suspended liquid, and furthermore reaction was performed at 20 to 25°C for one hour with continuous stirring. By filtration and drying performed under the same conditions as Example 1, 297 mg of blue-green powder was obtained. The Ni-Al molar ratio was found by ICP analysis to be 2.96, which was mostly identical to that of the starting material.

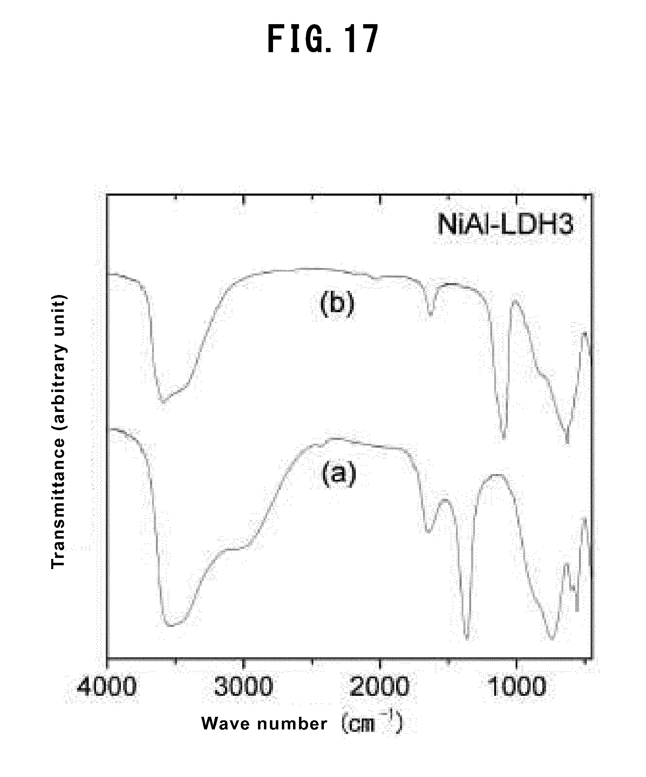

The infrared absorption profile by Fourier transform infrared spectroscopy (FTIR) (FIG. 17) exhibits that absorption due to carbonate ions at 1360 cm⁻¹ was lost, and intense absorption characteristics of ClO₄⁻ appeared in the range from 1090 to 1100 cm⁻¹ in the generated ClO₄⁻ type (FIG. 17 (b)), which indicates that the product is high-purity ClO₄⁻LDH.

Powder X-ray diffraction measurement was performed under the same conditions as Example 5 (FIG. 16).
In FIG. 16, (2a) represents the profile of CO₃²⁻ type, and (2b) represents that of ClO₄⁻ type. In (2b), no reflection by CO₃²⁻ type was observed, which indicates that complete conversion into ClO₄⁻ type had been completed.

The shape of CO₃²⁻-type and that of ClO₄⁻-type NiAl-LDHs were observed using a scanning electron microscope. The perchlorate ion-type LDH succeeded the shape of the carbonate ion-type LDH, the starting material, indicating that conversion had been performed by ion exchange while the outer shape was maintained.
As in the case of Example 5, decarbonation was found to occur also with the LDHs containing metallic ions other than MgAl-LDH.

### Example 7

### (Perchloric acid-methanol system; NiAl-LDH4)

CO₃²⁻NiAl-LDH4, which had larger Ni content (Ni/Al=4) than Example 6 was synthesized. 12.5 mL of a mixed solution prepared by dissolving 436 mg of Ni(NO₃)₂·6H₂O, 141 mg of Al(NO₃)₃·9H₂O, and 248 mg of urea was poured in a 25-mL pressure-tight Teflon^{®} container, which was housed in a pressure-tight stainless steel container and sealed, and hydrothermal treatment was performed at 180°C for 3 days. 223 mg of product was obtained. The particle size ranged from 0.2 to 0.8 µm, and the Ni-Al molar ratio was 3.83 (±0.08).

Conversion into perchlorate ion type was performed using CO₃²⁻NiAl-LDH4. 329 mg of CO₃²⁻NiAl-LDH4 was weighed, to which 45 mL of methanol was added to prepare suspended liquid. To this suspended liquid, a solution prepared by dissolving 140 mg of perchloric acid (60%) in 5 mL of methanol was dropped in nitrogen gas flow, while the liquid was being agitated with a magnetic stirrer, and furthermore, reaction was performed at 25°C for one hour with continuous stirring. By filtration and drying performed under the same conditions as Example 1, 353 mg of blue-green powder was obtained. The Ni-Al molar ratio was consistent with that of the starting material, falling within permissible error range.

The infrared absorption profile of the generated ClO₄⁻ type by Fourier transform infrared spectroscopy (FTIR) exhibited that the absorption by carbonate ions at 1360 cm⁻¹ was lost, and intense absorption characteristics of ClO₄⁻ appeared in a range from 1090 to 1100 cm⁻¹, meaning that high-purity ClO₄⁻LDH had been produced.

Powder X-ray diffraction measurement was performed under the same conditions as Example 5 (FIG. 16).
In FIG. 16, (3a) exhibits the profile of CO₃²⁻ type, and (3b) shows that of ClO₄⁻ type. No reflection by CO₃²⁻ type was found in (3b), which indicates that conversion into ClO₄⁻ type was completed.

The shape of CO₃²⁻-type NiAl-LDH and that of ClO₄⁻-type NiAl-LDH were observed under a scanning electron microscope. The shape of carbonate ion-type LDH and perchlorate ion-type LDH, namely starting materials, were succeeded, which indicates that conversion was performed by ion exchange while the outer shape was maintained.
As in the case of Example 5, decarbonation was found to occur also with the LDHs containing metallic ions other than MgAl-LDH.

### Example 8

### (Perchloric acid-various solvents system; MgAl-LDH3)

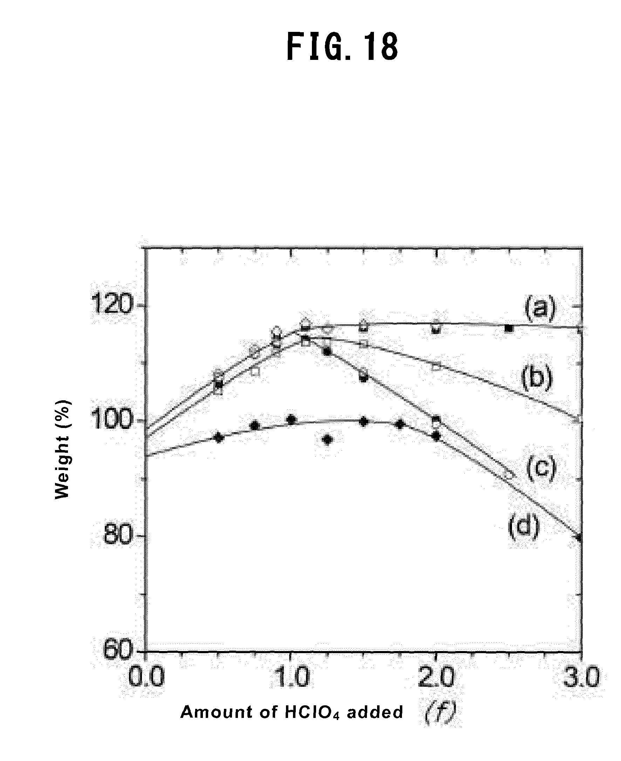

Experiments were conducted using ethanol, hydrous ethanol (containing water by 10 wt%), tetrahydrofuran (THF), and acetone, instead of methanol solvent in Example 1. The experimental conditions were the same as Example 1. The reaction time was 0.5 hours. FIG. 18 shows the amount of acid added and change in weight of the product, along with the results obtained when methanol and water were used in Example 1.

FIG. 18 shows the weight (%) of the product obtained when HClO₄ was added in various solvents, with respect to the amount of acid (f). (a) is the profile obtained using methanol (shown by filled square ■) and ethanol (shown by empty diamond 0), (b) is the profile obtained using 10 wt% hydrous ethanol (shown by empty square □), (c) is the profile obtained using acetone (shown by filled circle ●) and THF (shown by empty circle ○), and (d) is the profile obtained using water (shown by filled diamond ◆).

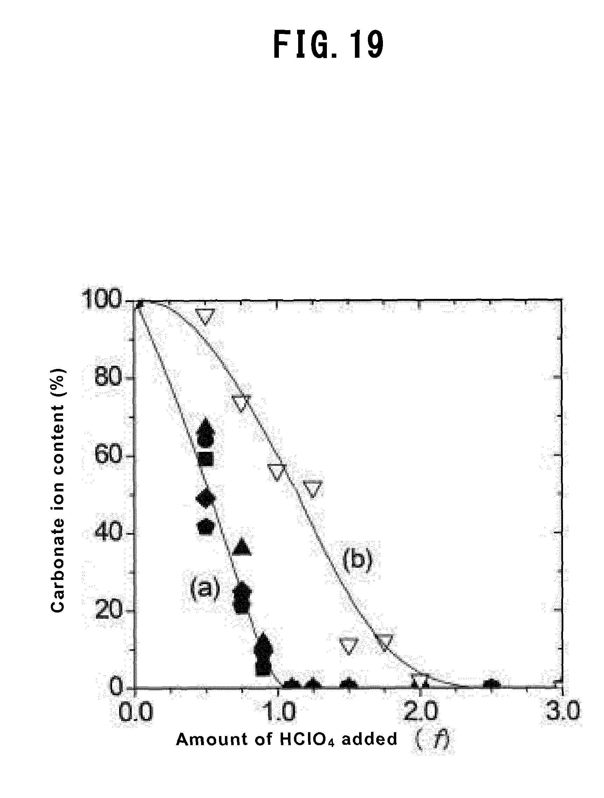

FIG. 19 shows the amount of residual carbonate ions in the products in the same experiment. (a) is the profile obtained using methanol (shown by filled square ■), ethanol (shown by filled circle ●), 10 wt% hydrous ethanol (shown by filled triangle A), acetone (shown by filled diamond ◆), and THF (shown by filled pentagon), and (b) is the profile obtained using water (shown by empty triangle Δ). Assuming that reaction progresses quantitatively, residual carbonate ions should be lost when f=1.0. From FIG. 19, water solvent only requires HClO₄ of f=2 to 2.5, but with other organic solvents, namely in (a), residual carbonate ions were lost when f was approximately 1 (f=1), which indicates that reactions occurred quantitatively.

In FIG. 18, the weight increased with the addition of HClO₄ because carbonate ions were substituted by ClO₄⁻, which increased the molecular weight. The weight reached the maximum value around f=1. If acid was added more excessively, almost no weight loss was found when f=1 or larger in alcohols such as methanol and ethanol, but in 10 wt% hydrous ethanol solvent (FIG. 18 (b)), the weight loss due to excessive amount of acid is larger than that observed in pure ethanol, which was due to dissolution.

Meanwhile, in organic solvents other than alcohol, decarbonation occurred quantitatively as shown in FIG. 19, and the weight loss observed when excessive amount of acid was added (FIG. 18 (c)) further increased. When water is used as a solvent, weight loss during the filtration operation etc is larger than that exhibited when organic solvents are used. In addition, since the decarbonation did not occur quantitatively, and dissolution started to occur due to excessive amount of acid, the maximum weight value became lower than that exhibited when organic polar solvents were used. These results show that the decarbonation caused by adding an acid occurs quantitatively in organic polar solvents, and that dissolution of LDH itself is suppressed in organic solvents.

### Example 9

### (Ammonium salt-methanol system; MgAl-LDH3)

Using ammonium salt, a type of amine acid salt, specifically, using ammonium chloride (NH₄Cl), ammonium perchloride (NH₄ClO₄) and ammonium nitrate (NH₄NO₃), decarbonation was performed in methanol solution. These are salts respectively made up of ammonia, which is weak base, and hydrochloric acid (HCl), perchloric acid (HClO₄), and nitric acid (HNO₃), which are a strong acids. As LDH, CO₃²⁻MgAl-LDH3 was used as a starting material. The amount of addition was represented by value f. For example, assuming that only one H is protic, of the 4 Hs of NH₄Cl, one proton is considered to be supplied from NH₄Cl. Consequently, value f is represented as follows: f=[H⁺]/(2×[CO₃²⁻])=[NH₄Cl]/(2×[CO₃²⁻]). 100 mg of CO₃²⁻MgAl-LDH3 and 50 mL of methanol were used.

Ammonium salt was dissolved in 10 to 20 mL methanol, and the remaining methanol was used to suspend CO₃²⁻MgAl-LDH3. The experimental method was the same as Example 1. Reaction was performed by adding the methanol solution of ammonium salt in nitrogen gas flow while the solution was being agitated. The same procedure was followed with other ammonium salts. Although a large amount of CO₂ was found in outlet nitrogen gas due to decarbonation in all of them (peak of discharged CO₂ concentration: 2 to 5 minutes after addition), discharge of slight amount of CO₂ was also found even after one hour. The reaction time was therefore defined as 1.5 hours.

As in Examples 1 to 4, the obtained products were identified by FTIR and powder X-ray diffraction measurement, and MgAl-LDH3 containing anion of ammonium salt was confirmed to have been prepared in all of them.

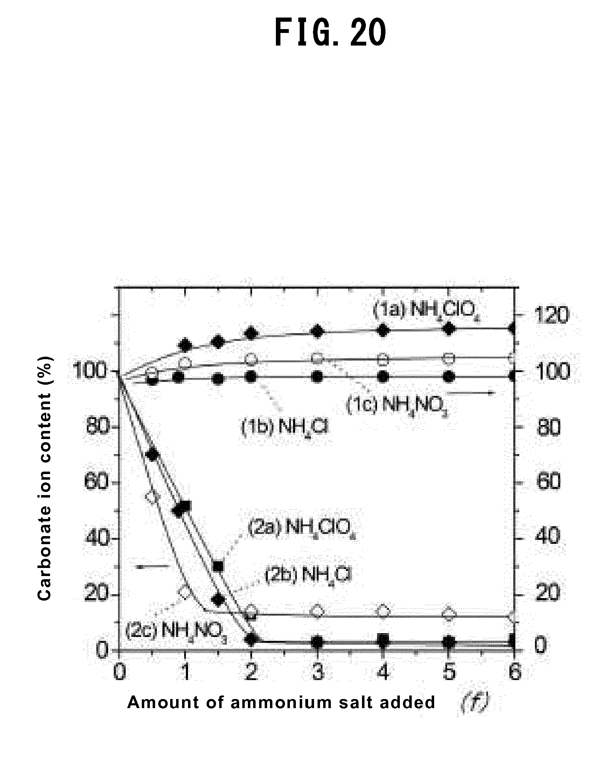

FIG. 20 shows the relation between the amount of ammonium salt added and the residual carbonate ion content, and change in weight, of the products obtained.
In FIG. 20, (1a), (1b), and (1c) are curves respectively showing the change in weight of NH₄ClO₄, NH₄Cl, and NH₄NO₃, and (2a), (2b), and (2c) are curves respectively showing the change in the content of residual carbonate ions of NH₄ClO₄, NH₄Cl, and NH₄NO₃.
As shown in FIG. 20, the residual carbonate ion content in the obtained products decreased to 5% or lower by the addition of ammonium salt of the amount of f=2 to 3, except when ammonium nitrate was used. The residual carbonate ion content was 12% or lower when ammonium nitrate was used. If value f was increased to 3 or higher, no significant change in the residual amount was found.
The weight of the products obtained increased until value f reached 3, because molecular weight increased due to substitution of anions. No change in weight was found even if the amount of addition was 3 or higher and up to 6, and thus weight loss considered to result from dissolution was not found at all.
From the above, it was found that the residual carbonate ions were mostly lost, and that no weight loss occurred due to addition of excessive amount of ammonium salt, when the amount of addition was f=2 or larger.

To examine the change in weight in long-time reaction, reaction was made to occur in nitrogen gas flow under f=5 condition for 1.5 hours using NH₄Cl, NH₄ClO₄, and NH₄NO₃, and after sealing in nitrogen for 5 days, the products were taken out and their weight was measured. No difference was found between the weight of the product taken out in 1.5 hours and that of the product taken out in 5 days. Weight loss by dissolution was thus not found.

Experiment was conducted by mixing ammonium salt and hydrochloric aid. The amount of HCl was f=0.75, and that of NH₄Cl was f=1. When HCl (f=0.75) and NH₄Cl (f=1) were used independently, carbonate ions were found to be remaining by 25% and 50% respectively. However, when they are used in combination, the amount of residual carbonate ions was 3% or lower.

Experiment was conducted using ethanol, instead of methanol. NH₄Cl (f=3) was added and reaction was performed for 2 hours, and the same results were obtained as in the case of methanol.

For comparison, decarbonated water was used, instead of methanol, to conduct experiment of causing reaction to occur using NH₄Cl under f=8 condition, the largely excessive addition condition, for 3 hours. The amount of residual carbonate ions was 91%, meaning that they had rarely been substituted by Cl⁻, decarbonation was not found, and CO₂ was not found in outlet nitrogen gas.

Experiment was conducted using NH₄Br, whose anion is Br⁻, as another ammonium salt. Reaction was made to occur for one hour in methanol (f=3). A large amount of CO₂ was found in outlet nitrogen gas due to decarbonation, and the amount of residual carbonate ions in the product Br⁻MgAl-LDH3 was as low as 3%.

### Example 10

### (Alkylamine hydrochloride-methanol system; MgAl-LDH3)

Using alkylamine hydrochloride represented as RⱼNH₍₃₋ⱼ₎·HCl, a compound of alkylamine, which is weak base, and hydrochloric acid, decarbonation was made to occur in a methanol solution. R in the alkylamine hydrochloride used represents methyl group and ethyl group. Specifically, methylamine hydrochloride ((CH₃)NH₂·HCl), dimethylamine hydrochloride ((CH₃)₂NH·HCl), trimethylamine hydrochloride ((CH₃)₃N·HCl), ethylamine hydrochloride ((CH₃CH₂)NH₂·HCl), diethylamine hydrochloride ((CH₃CH₂)₂NH·HCl), and triethylamine hydrochloride ((CH₃CH₂)₃ N·HCl) were used.

CO₃²⁻MgAl-LDH3 was used as the starting material, and the amount of addition was represented by value f. For example, since H, one of the components of HCl, is only protic molecule, one proton was considered to be supplied from the acid salts represented by these chemical formulae. Value f is represented as follows: f=[H+]/(2×[CO₃²⁻])=[RⱼNH₍₃₋ⱼ₎·HCl]/(2×[CO₃²⁻]).
100 mg of CO₃²⁻MgAl-LDH3 and 50 mL of methanol were used. Amine acid salt was dissolved in 10 to 20 mL of methanol, and the remaining methanol was used to suspend CO₃²⁻MgAl-LDH3. The experimental method was the same as Example 9, but the experiment was conducted at f=3.

As a result, in all the experiments conducted using the amine acid salt shown above, the carbon dioxide concentration in outlet nitrogen gas increased significantly, and reached the maximum value in 2 to 5 minutes. The infrared absorption profile and powder X-ray diffraction profile of the products confirmed that the products were Cl⁻MgAl-LDH3. The amount of residual carbonate ions was 5% or lower, and weight loss of the products due to dissolution was not found.

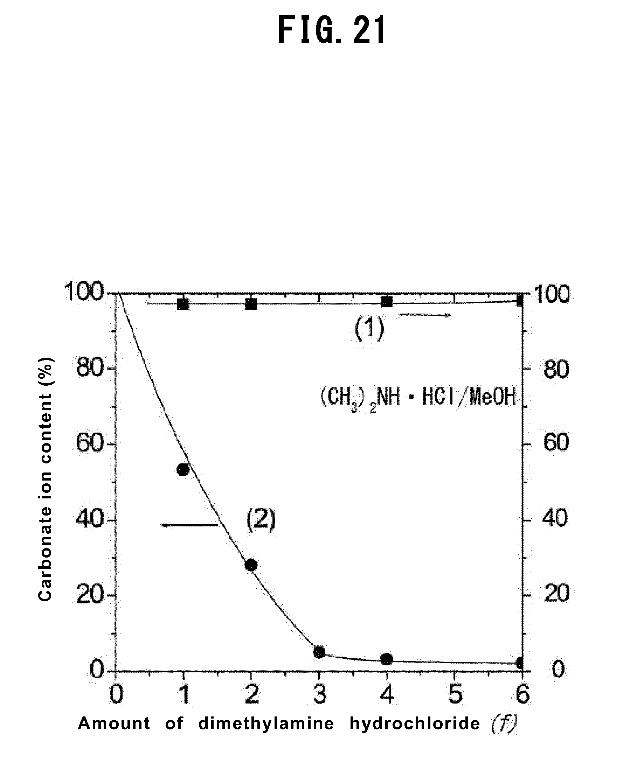

Regarding (CH₃)₂NH·HCl, the relation with the amount of residual carbonate ions and change in weight were examined by changing value f. FIG. 21 is a chart plotting the value f and the amount of residual carbonate ions in the products, where (1) is a curve showing the carbonate ion content, and (2) is a curve showing the change in weight of the product. When f=3, the amount of residual carbonate ions decreased to 3% or lower, and even if value f was increased to 6, no change in weight of the product was found, meaning that no weight loss due to dissolution was found.

Experiments were conducted using (CH₃)₂NH·HCl and (CH₃)₃N·HCl, and ethanol, instead of methanol, with value f fixed to 3 (f=3). As a result, generation of Cl⁻MgAl-LDH3 was confirmed. The amount of residual carbonate ions was 3% or lower, and the weight was approximately the same as that of methanol.

For comparison, reaction was caused using (CH₃)₂NH·HCl and (CH₃)₃N·Cl, and degassed water, instead of alcohol, under f=8 condition for 3 hours. The amount of residual carbonate ions was approximately 80%, meaning that substitution by Cl⁻ hardly occurred. In addition, CO₂ was not found in outlet nitrogen gas, meaning that decarbonation did not occur.

### Example 11

### (Hydroxylamine hydrochloride or ethanolamine hydrochloride-methanol system; MgAl-LDH3)

Using amine acid salt other than those used in Example 10, experiments of decarbonation were conducted. The used amine acid salt were:
(1) Hydroxylamine hydrochloride (R in RNH₂·HCl is hydroxyl group) and methoxylamine hydrochloride (R in RNH₂·HCl is methyl group), and
(2) Ethanolamine hydrochloride, diethanolamine hydrochloride, and triethanolamine hydrochloride (R in RjNH₍₃₋ⱼ₎·HCl is ethyl group).

CO₃²⁻MgAl-LDH3 was used as the starting material, and the amount of addition was represented by value f. As in the case of Example 10, since H, one of the components of HCl, is only protic molecule, one proton was considered to be supplied from the amine acid salt represented by these chemical formulae (f=[H⁺]/(2×[CO₃²⁻]).
100 mg of CO₃²⁻MgAl-LDH3 and 50 mL of methanol were used. The amine acid salt were dissolved in 10 to 20 mL methanol, and the remaining methanol was used to suspend CO₃²⁻MgAl-LDH3. The experimental method was the same as Example 9, except that value f was fixed to 3.

In all the experiments conducted using amine acid salt shown above, the CO₂ concentration in the outlet nitrogen gas increased significantly, and exhibited the maximum value in 2 to 5 minutes. The infrared absorption profile and powder X-ray diffraction profile confirmed that the products were Cl⁻MgAl-LDH3. In all the experiments, the amount of residual carbonate ions was 5% or lower, and no weight loss of the products due to dissolution was found.

Regarding HO(CH₂)₂NH₂·HCl (ethanolamine hydrochloride), reaction was made to occur under the condition of largely excessive addition of f=8 for 3 hours, using decarbonated water, instead of alcohol, for comparison. However, the amount of residual carbonate ions remained around 86%, meaning that substitution by Cl⁻ hardly occurred. In addition, no CO₂ was found in outlet nitrogen gas, meaning that no decarbonation occurred.
As shown in Examples 9, 10, and 11, it was found that decarbonation occurred when amine acid salts were used in alcohol.

### Example 12

### (Metal salt-methanol system; MgAl-LDH3)

Metal salts formed by reaction of weak alkaline metal hydroxide with strong acid tend to generate the protic acids (HX) by hydrolysis at equilibrium. Salts formed by the reaction of divalent or trivalent metal hydroxides with strong acids belong to such kind of metal salts.
In this Example, AlCl₃·6H₂O containing trivalent Al was used as metal salt. Since Al is hydrate salt, there exist sufficient amount of water for hydrolysis.

The amount of addition was expressed by value f. Since AlCl₃·6H₂O generates three HCl ions by hydrolysis, three protons, the same quantity as that of Cl, were considered to be supplied. Consequently, f=[H⁺]/(2×[CO₃²⁻])=[Cl⁻]/2×[CO₃²⁻]).

100 mg of CO₃²⁻MgAl-LDH and 50 mL f methanol were used. The metal salt was dissolved in 10 to 30 mL of methanol, and the remaining methanol was used to suspend CO₃²⁻MgAl-LDH3. The experimental method was the same as Example 1. Reaction was performed while methanol solution of metal salt was added and agitated in nitrogen gas flow.
For comparison, experiment was also conducted using NaCl, which is neutral salt. Reaction time was 2 hours, and the obtained product was identified by FTIR.

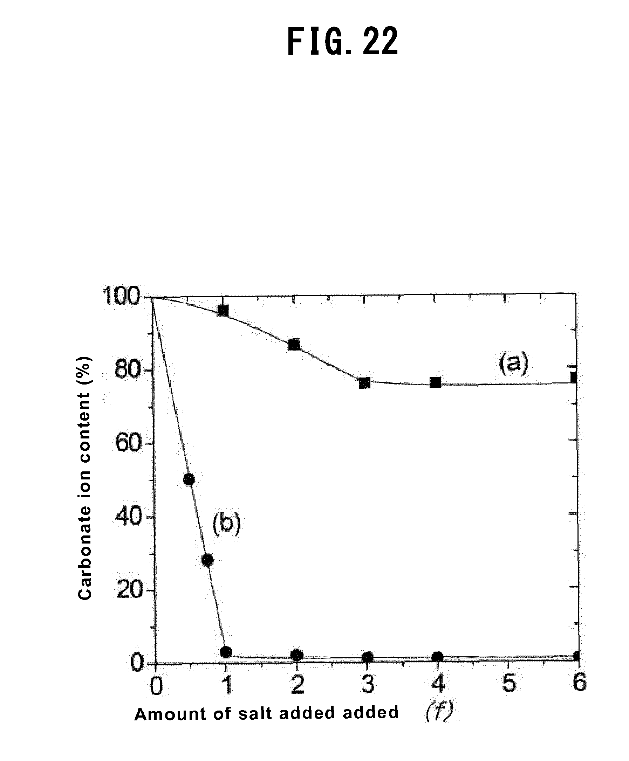

FIG. 22 is a chart plotting the value f and the amount of residual carbonate ions in the product. As shown by (b) in FIG. 22, reaction occurred almost quantitatively with AlCl₃·6H₂O, and when f=1 or higher, the amount of residual carbonate ions became 5% or lower. Meanwhile, as shown by (a) in FIG. 22, the amount of residual carbonate ions was never 70% or lower with NaCl.
Experiments were also conducted using LiCl and KCl, which are also neutral salts, in addition to NaCl. The same behavior as NaCl was exhibited, and the amount of residual carbonate ions was never be 70% or lower.

Rapid increase in CO₂ in outlet nitrogen gas was found (peak in discharge was found in 2 to 5 minutes after the addition) with AlCl₃·6H₂O. Meanwhile with NaCl, LiCl, and KCl, which are neutral salts, no CO₂ due to decarbonation was found in outlet nitrogen gas.

### Example 13

### (Under air flow; MgAl-LDH3)

In this Example, experiment was conducted using CO₃²⁻MgAl-LDH3 and in air flow by an air pump, instead of nitrogen gas flow. Filtration only was performed in nitrogen gas flow. This experiment condition is such that the amount of residual carbonate ions is expected to be 3% or lower if the reaction is conducted in nitrogen gas flow.

Using HCl as an acid, experiment was conducted in ethanol under the same conditions as Example 2 except for atmosphere. The amount of HCl was f=1.25. Another experiment was conducted using HClO₄ as an acid in methanol solvent under the same conditions as Example 1 except for atmosphere. The amount of HClO₄ was f=1.25. The products were identified and the amounts of residual carbonate ions were measured by FTIR, and the amounts of residual carbonate ions in both products were 3% or lower.

Then, using NH₄Cl as ammonium salt, experiment was conducted in methanol under the same conditions as Example 9 except for atmosphere. The amount of NH₄Cl was f=3. The amount of residual carbonate ions in the product was 20%.

In addition, using dimethylamine hydrochloride as amine acid salt, experiment was conducted in ethanol under the same conditions as Example 10 except for atmosphere. The amount of dimethylamine hydrochloride was f=3. The amount of residual carbonate ions in the product was 10%.
The results described above indicate that when acids were used, no effect of the atmosphere was observed whether nitrogen gas flow or air flow adopted; however, when amine acid salt were used, the atmosphere was found to have effect, and the amount of residual carbonate ions was larger for the reaction performed in air flow.

### Example 14

### (Ammonium acetate-methanol, ethanol system)

Experiment was conducted regarding a case where X- was CH₃COO⁻ (acetate ion). The obtained LDH is easily anion-exchangeable acetate ion-type LDH. As an acidic compound, ammonium acetate (CH₃COONH₄) was used. Ammonium acetate is represented as CH₃COOH·NH₃ in NRR'R"·HX because R=R'=R"=H and X=CH₃COO. The amount of ammonium acetate is represented as f=[H⁺]/(2×[CO₃²⁻])=[CH₃COONH₄]/(2×[CO₃²⁻]).

Reaction was performed in methanol containing ammonium acetate (CH₃COONH₄). 100 mg (0.331 mmol) of CO₃²⁻MgAl-LDH3 was poured in a three-neck flask, to which 40 mL of methanol was added and dispersed ultrasonically to prepare suspended liquid. While this suspended liquid was being agitated with a magnetic stirrer, a solution prepared by dissolving ammonium acetate of f=8 (Cica special grade) (204.2 mg; 2.65 mmol) in 10 mL of methanol was added to the liquid under nitrogen gas flow (0.5 L/min.) Reaction was performed at room temperatures (20 to 25°C) for 2 hours by agitating the CO₃²⁻MgAl-LDH3 suspended liquid under nitrogen gas flow using a magnetic stirrer. A large amount of CO₂ due to decarbonation was found in outlet nitrogen gas. By filtration and drying performed under the same conditions as Example 1, white powder was obtained.
FTIR confirmed generation of acetate ion-type LDH, and no residual carbonate ions were found.

Experiments were conducted under conditions other than f=8 described above, namely under f=4, 6, and 10 conditions. When f=4 and 6, slight amount of residual carbonate ions was found. When f=10, FTIR did not confirm the existence of residual carbonate ions.
When f=8 and 10, the yield was quantitative, and even when the amount 10 times that of the original was used, no weight loss due to dissolution was found.

For comparison, experiment was conducted using sodium acetate, which has no ability to release protons, under the same conditions. Sodium acetate of the amount equivalent to f=[CH₃COONa]/(2×[CO₃²⁻])=8, namely 217.3 mg, was used. To CO₃²⁻MgAl-LDH3 suspended liquid, methanol solution of f=8 sodium acetate was added while the liquid was being agitated in nitrogen gas flow using a magnetic stirrer, and reaction was performed at room temperatures (20 to 25°C) for 2 hours. No CO₂ was found in outlet nitrogen gas. By filtration and drying conducted under the same conditions as Experiment 1, white powder was obtained.
Although FTIR confirmed inclusion of acetate ions of several %, the profile was basically that of carbonate ion-type LDH.
From the above, it is apparent that not all acetate salts can be used but that efficient reactions are ensured only when ammonium salt, namely an acidic compound, is used.

### Example 15

### (Synthesis of acetate ion-type LDH using acetic acid)

Using acetic acid (X=CH₃COO in CH₃COOH;HX) as an acidic compound, acetate ion-type LDH was synthesized by decarbonation under the same conditions as Example 14. Reaction was performed for 1 to 2 hours at room temperatures (20 to 25°C) using acetic acid of the amounts f=[CH₃COOH]/(2×[CO₃²⁻])=2 and 3. In both cases (f=2 and 3), FTIR confirmed the generation of acetate ion-type LDH, and no residual carbonate ions were found. Even when ethanol was used instead of methanol (experiment was conducted under f=3 condition), acetate ion-type LDH was generated and no residual carbonate ions were found.

### Example 16

### (Ammonium acetate-methanol, ethanol system; heating)

Using ammonium acetate of the amount equivalent to f=1, reaction was performed in nitrogen gas flow at 45°C for 2 hours. Experiment was conducted using methanol as a solvent and 100 mg of CO₃²⁻MgAl-LDH3 under the same conditions as Example 14. Filtration and drying were conducted under the same conditions as Example 1, and white powder was obtained.
FTIR confirmed the generation of acetate ion-type LDH, and no residual carbonate ions were found. When ethanol was used as a solvent, acetate ion-type LDH was generated at 45°C when the amount of ammonium acetate was f=1, but existence of residual carbonate ions by approximately 5% was found. When the amount of ammonium acetate was increased to f=3, acetate ion-type LDH without residual carbonate ions was synthesized by the reaction caused at 40°C for 2 hours.

### Example 17

### (Acetic acid-methanol, ethanol system; heating)

Using methanol as a solvent and acetic acid of the amount equivalent to f=1, reaction was performed in nitrogen gas flow at 45°C for 2 hours. Filtration and drying were conducted under the same conditions as Example 1, and white powder was obtained. FTIR confirmed the generation of acetate ion-type LDH, and no residual carbonate ions were found. Similarly, when ethanol was used as a solvent, acetate ion-type LDH was generated at 45°C.

### Example 18

### (Ammonium chloride-methanol system;MgAl-LDH3; heating)

Using ammonium chloride (NH₄Cl), decarbonation was made to occur in methanol solution with reaction temperature increased.
100 mg of CO₃²⁻MgAl-LDH3 (0.331 mmol) was poured into a three-neck flask, to which 40 mL of methanol was added and dispersed ultrasonically to prepare suspended liquid. To this suspended liquid, a solution prepared by dissolving ammonium chloride (Cica special class) of the amount of f=1 (17.7 mg; 0.331 mmol) in 10 mL of methanol was added while the liquid was being agitated in nitrogen gas flow (0.5 L/min.) with a magnetic stirrer. Reaction was made to occur at 30°C and 40°C for 2 hours while the CO₃²⁻MgAl-LDH3 suspended liquid was being agitated with the magnetic stirrer. A large amount of CO₂ due to decarbonation was observed in outlet nitrogen gas. By filtration and drying performed under the same conditions as Example 1, white powder was obtained. In both cases where the temperature was 30°C and 40°C, FTIR confirmed the generation of chlorine ion-type LDH.
The amount of residual carbonate ions was 8% at 30°C and 2% at 40°C. When ammonium chloride (NH₄Cl) was used in Example 9 where experiments were conducted at room temperatures (20 to 25°C), the amount of residual carbonate ions was approximately 50%. Consequently, it is apparent that the amount of residual carbonate ions decreased by heating.
Furthermore, reaction was caused at a higher temperature (50°C), with the amount of ammonium chloride (NH₄Cl) increased to f=3, for 2 hours. Almost no residual carbonate ions were found, and weight loss due to dissolution was not found, either.
For comparison, experiment was conducted using sodium chloride (NaCl), which is a neutral salt that has no ability to release protons, under the same conditions. The amount of NaCl was equivalent to f=[NaCl]/(2×[CO₃²⁻])=1, namely 19.4 mg. To the CO₃²⁻MgAl-LDH3 suspended liquid, methanol solution of NaCl was added while the liquid was being agitated with a magnetic stirrer in nitrogen gas flow, and reaction was caused at 50°C for 2 hours. No CO₂ was found in outlet nitrogen gas. Filtration and drying were performed under the same conditions as Example 1, and white powder was obtained. Although FTIR confirmed the inclusion of chlorine ions, the profile was basically that of carbonate ion-type LDH, and the amount of carbonate ions was 75%, which was mostly identical to the value obtained when reaction was caused at room temperatures.
From the above, it was found that reaction was promoted by heating when ammonium salt, which is an acidic compound, was used.

### Industrial applicability

As mentioned in Advantageous Effect of Invention, the present invention has a special meaning.
Namely, the present invention allows anion-exchanging LDH, which has not conventionally been obtained easily, to be obtained easily, more safely, and in a short time.
Since the obtained anion-exchanging LDH allows anionic functional organic molecules to be produced and provided by so-called soft chemical reaction based on extremely simple operations such as anion-exchanging process, the present invention is expected to lead to the development and promotion of new materials having new functions. Protecting organic molecules having biological functions by inserting them between layers, and using them for drug delivery have already been proposed.
In addition, it is also possible to turn these anion-exchanging LDHs into swelling LDHs, from which LDH nanosheets can be formed.

## Claims

1. A method for producing an anion-exchanging layered double hydroxide having value b in general formula (1) of 0.5 or higher and 1 at a maximum, comprising:
reacting a carbonate ion-type layered double hydroxide represented by general formula (1) with an organic solvent containing an acidic compound represented by general formula (2):
QₐT(OH)_{z}(CO₃)_{0.5-b/2}X_{b}·nH₂O (1)
where 1.8≤a≤4.2, 0≤b<0.5, z=2(a+1), Q represents divalent metal, T represents trivalent metal, X- represents monovalent anion, and 0≤n≤5,
MXₘ (2)
where X represents an element or atom group corresponding to monovalent anion (X⁻); m is 1, 2, or 3; when m=1, MX is protic acid (HX) or amine acid salt represented as NRR'R"·HX (where R, R', and R" represent hydrogen, hydroxyl group, or organic group, each being allowed to be the same or different); and when m=2 or 3, MX is a metal salt of a divalent or trivalent metal.

2. The method for producing an anion-exchanging layered double hydroxide as set forth in claim 1, wherein the acidic compound represented as MX₂ or MX₃ is a metal salt that generates protic acid (HX) by hydrolysis.

3. The method for producing an anion-exchanging layered double hydroxide as set forth in claim 1, wherein the X- is any one of the following anions: chlorine ion (Cl⁻), bromine ion (Br⁻), nitrate ion (NO₃⁻), perchlorate ion (ClO₄⁻), chlorate ion (ClO₃⁻), and acetate ion (CH₃COO⁻).

4. The method for producing an anion-exchanging layered double hydroxide as set forth in claim 1, wherein each of R, R', and R" of the amine acid salt is represented by composition formula CₜHₚO_{q} (t=0 to 6, p=1 to 13, and q=0 to 2).

5. The method for producing an anion-exchanging layered double hydroxide as set forth in claim 4, wherein R, R', and R" of the amine acid salt are substituent groups selected from hydrogen, hydroxyl group, alkyl group, or alkyl group substituted by hydroxyl group.

6. The method for producing an anion-exchanging layered double hydroxide as set forth in claim 5, wherein the alkyl group is methyl group or ethyl group, and the alkyl group substituted by hydroxyl group is hydroxymethyl group or hydroxyethyl group.

7. The method for producing an anion-exchanging layered double hydroxide as set forth in claim 5, wherein the amine acid salt is an ammonium salt.

8. The method for producing an anion-exchanging layered double hydroxide as set forth in claim 5, wherein the X- is chlorine ion (Cl⁻).

9. The method for producing an anion-exchanging layered double hydroxide as set forth in claim 2, wherein the M is any one of the following divalent metals: Zn, Mg, and Ca.

10. The method for producing an anion-exchanging layered double hydroxide as set forth in claim 2, wherein the M is trivalent Fe or Al.

11. The method for producing an anion-exchanging layered double hydroxide as set forth in claim 1, wherein the organic solvent is one or more types of organic solvents having carbon number of 1 to 4.

12. The method for producing an anion-exchanging layered double hydroxide as set forth in claim 1, wherein the organic solvent is methanol, ethanol, 2-propanol, tetrahydrofuran, or acetone.

13. The method for producing an anion-exchanging layered double hydroxide as set forth in claim 1, wherein the carbonate ion-type layered double hydroxide represented by general formula (1) is dispersed in an organic solvent containing an acidic compound represented by general formula (2), and reaction is caused under temperature condition of 10°C or higher and lower than 50°C.

14. The method for producing an anion-exchanging layered double hydroxide as set forth in claim 1, wherein a carbonate ion-type layered double hydroxide represented by general formula (1) is made to contact an organic solvent containing a chemical compound represented by general formula (2) to produce an anion-exchanging layered double hydroxide represented by general formula (3):
QₐT(OH)_{z}(CO₃)_{0.5-b/2}X_{b}·nH₂O (1)
where 1.8≤a≤4.2; 0≤b<0.5; z=2(a+1); Q represents divalent metal; T represents trivalent metal; X- represents monovalent anion; and 0≤n≤5,
MXₘ (2)
where X means an element or atomic group corresponding to monovalent anion (X⁻); m is 1, 2, or 3; and when m=1, MX represents protic acid (HX) or amine acid salt (NRR'R"·HX, where R, R', and R" are hydrogen, hydroxyl group, or organic group, each being allowed to be the same or different); and when m=2 or 3, M represents a divalent or trivalent metal),
QₐT(OH)_{z}(X⁻)·nH₂O (3)
where 1.8≤a≤4.2; z=2(a+1); Q represents divalent metal; T represents trivalent metal; X- represents monovalent anion; and 0≤n≤5.)

15. A method for substituting carbonate ions in a carbonate ion-type layered double hydroxide by monovalent anions, wherein a carbonate ion-type layered double hydroxide represented by general formula (1) and an acidic compound represented by general formula (2) are made to contact each other in an organic solvent:
QₐT(OH)_{z}(CO₃)_{0.5-b/2}X_{b}·nH₂O (1)
where 1.8≤a≤4.2; 0≤b<05; z=2(a+1); Q represents divalent metal; T represents trivalent metal; X⁻ represents monovalent anion; and 0≤n≤5,
MXₘ (2)
where X means an element or atomic group corresponding to monovalent anion (X⁻); m is 1, 2, or 3; and when m=1, MX represents a protic acid (HX) or an amine acid salt represented as NRR'R"·HX (R, R', and R" are hydrogen or organic group, each being allowed to be the same or different); and when m=2 or 3, M represents a divalent or trivalent metal).
